# EUROPEAN PATENT APPLICATION

(11) **EP 4 451 370 A1**
(43) Date of publication of application: **23.10.2024**
(21) Application number: 23778745.2
(22) Date of filing: 17.01.2023
(51) Int. Cl.: H01M 4/139, H01M 4/13, H01M 4/62

(54) **POSITIVE ELECTRODE COMPOSITION AND PRODUCTION METHOD FOR SAME, POSITIVE ELECTRODE AND PRODUCTION METHOD FOR SAME, AND BATTERY**

(30) Priority: 30.03.2022 JP 2022055401
(71) Applicant: Denka Company Limited, Chuo-ku Tokyo 103-8338 (JP)
(72) Inventor: NAGAI Tatsuya, Tokyo 103-8338 (JP); MATSUI Mizuki, Tokyo 103-8338 (JP); ITO Tetsuya, Tokyo 103-8338 (JP)
(74) Representative: Mewburn Ellis LLP
(86) International application number: PCT/JP2023/001215
(87) International publication number: WO 2023/188706

(57) **Abstract**

A positive electrode composition containing a conductive material, an active material, a binding material, a dispersing agent for a conductive material, and a liquid medium, wherein the conductive material includes carbon black and carbon nanotubes, wherein the dispersing agent for a conductive material includes two or more dispersing agents having different SP values, and wherein the carbon black has a BET specific surface area of 100 to 500 m²/g.

## Description

### Technical Field

The present invention relates to a positive electrode composition, a method of producing the same, a positive electrode, a method of producing the same, and a battery.

### Background Art

Due to increasing environmental and energy issues, the development of technologies for realizing a low-carbon society in order to reduce dependence on fossil fuels is being actively conducted. Such technology developments are wide-ranging, including development of low-emission vehicles such as hybrid electric vehicles and electric vehicles, development of natural energy power generation and power storage systems such as solar power generation and wind power generation, and development of next-generation power transmission networks in order to supply power efficiently, and reduce power transmission losses.

One key device commonly required in these technologies is a battery, and such batteries are required to have a high energy density in order to reduce the size of the system. In addition, high output characteristics that allow stable power supply regardless of the temperature of the operating environment are required. In addition, favorable cycle characteristics that enable them to withstand long-term use are also required. Therefore, the replacement of conventional lead storage batteries, nickel-cadmium batteries, and nickel-hydride batteries with lithium ion secondary batteries having better energy densities, output characteristics and cycle characteristics is rapidly progressing.

Conventionally, a positive electrode of a lithium ion secondary battery is produced by applying a positive electrode paste containing a positive electrode active material, a conductive material and a binding material (also referred to as a binder) onto a current collector. As the positive electrode active material, lithium-containing composite oxides such as lithium cobaltate and lithium manganate have been used. In addition, since the positive electrode active material has poor conductivity, a conductive material such as carbon black has been added to the positive electrode paste in order to impart conductivity (for example, Patent Literature 1).

### Citation List

### Patent Literature

[Patent Literature 1] Japanese Unexamined Patent Publication No. 2008-227481

### Summary of Invention

### Technical Problem

In recent years, there has been a demand for further improvement in performance of lithium ion secondary batteries.

An object of the present invention is to provide a positive electrode composition that allows a lithium ion secondary battery having low internal resistance and excellent discharge rate characteristics and cycle characteristics to be obtained, and a method of producing the positive electrode composition. In addition, an object of the present invention is to provide a positive electrode that allows a lithium ion secondary battery having low internal resistance and excellent discharge rate characteristics and cycle characteristics to be obtained, and a method of producing the positive electrode. In addition, an object of the present invention is to provide a battery including the positive electrode.

### Solution to Problem

The present invention relates to, for example, the following < 1> to <15>.
< 1 > A positive electrode composition containing a conductive material, an active material, a binding material, a dispersing agent for a conductive material, and a liquid medium,
   wherein the conductive material includes carbon black and carbon nanotubes,
   wherein the dispersing agent for a conductive material includes two or more dispersing agents having different SP values, and
   wherein the carbon black has a BET specific surface area of 100 to 500 m²/g.
<2> The positive electrode composition according to <1>,
   wherein a ratio (mass ratio) of the content of the carbon nanotubes to a total content of the carbon black and the carbon nanotubes is 0.1 to 0.7.
<3> The positive electrode composition according to <1> or <2>,
   wherein the dispersing agent for a conductive material is selected from the group consisting of polyvinyl alcohol, polyvinylpyrrolidone, polyvinyl butyral, carboxymethyl cellulose and salts thereof, polyvinyl acetal, polyvinyl acetate, polyvinylamine and polyvinyl formal.
<4> The positive electrode composition according to any one of <1> to <3>, wherein the carbon black has a BET specific surface area of 100 to 400 m²/g and a crystallite size (Lc) of 15 to 26 Å.
<5> The positive electrode composition according to any one of <1> to <4>, wherein the carbon nanotubes have an average diameter of 5 to 15 nm.
<6> A method of producing a positive electrode composition, including:
   a first process in which a first agent containing a binding material and a first liquid medium, a second agent containing carbon black, a first dispersing agent for a conductive material and a second liquid medium, and a third agent containing carbon nanotubes, a second dispersing agent for a conductive material and a third liquid medium are mixed to obtain a mixed solution; and
   a second process in which the mixed solution and an active material are mixed to obtain a positive electrode composition,
   wherein the first dispersing agent for a conductive material has a different SP value from the second dispersing agent for a conductive material.
<7> A method of producing a positive electrode composition, including:
   a first process in which a first agent containing a binding material and a first liquid medium and a second agent containing carbon black, a first dispersing agent for a conductive material and a second liquid medium are mixed to obtain a first mixed solution;
   a second process in which the first mixed solution and a third agent containing carbon nanotubes, a second dispersing agent for a conductive material and a third liquid medium are mixed to obtain a second mixed solution; and
   a third process in which the second mixed solution and an active material are mixed to obtain a positive electrode composition,
   wherein the first dispersing agent for a conductive material has a different SP value from the second dispersing agent for a conductive material.
<8> The production method according to <6> or <7>,
   wherein the SP value of the first dispersing agent for a conductive material is higher than the SP value of the second dispersing agent for a conductive material.
<9> The production method according to any one of <6> to <8>, wherein a ratio (mass ratio) of the content of the carbon nanotubes to a total content of the carbon black and the carbon nanotubes is 0.1 to 0.7.
<10> The production method according to any one of <6> to <9>, wherein the first dispersing agent for a conductive material and the second dispersing agent for a conductive material each are selected from the group consisting of polyvinyl alcohol, polyvinylpyrrolidone, polyvinyl butyral, carboxymethyl cellulose and salts thereof, polyvinyl acetal, polyvinyl acetate, polyvinylamine and polyvinyl formal.
<11> A method of producing a positive electrode, including a process of applying the positive electrode composition according to any one of <1> to <5> onto a current collector to form a mixture layer containing the conductive material, the active material, the binding material and the dispersing agent for a conductive material on the current collector.
<12> A positive electrode having a mixture layer containing a conductive material, an active material, a binding material and a dispersing agent for a conductive material, wherein the conductive material includes carbon black and carbon nanotubes, wherein the dispersing agent for a conductive material includes two or more dispersing agents having different SP values, and wherein the carbon black has a BET specific surface area of 100 to 500 m²/g.
<13> The positive electrode according to <12>,
   wherein a ratio (mass ratio) of the content of the carbon nanotubes to a total content of the carbon black and the carbon nanotubes is 0.1 to 0.7.
<14> The positive electrode according to <12> or <13>, wherein the dispersing agent for a conductive material is selected from the group consisting of polyvinyl alcohol, polyvinylpyrrolidone, polyvinyl butyral, carboxymethyl cellulose and salts thereof, polyvinyl acetal, polyvinyl acetate, polyvinylamine and polyvinyl formal.
<15> A battery including the positive electrode according to any one of <12> to <14>.

### Advantageous Effects of Invention

According to the present invention, there are provided a positive electrode composition that allows a lithium ion secondary battery having low internal resistance and excellent discharge rate characteristics and cycle characteristics to be obtained and a method of producing the positive electrode composition. In addition, according to the present invention, there are provided a positive electrode that allows a lithium ion secondary battery having low internal resistance and excellent discharge rate characteristics and cycle characteristics to be obtained, and a method of producing the positive electrode. In addition, according to the present invention, there is provided a battery including the positive electrode.

### Description of Embodiments

Hereinafter, preferable embodiments of the present invention will be described in detail.

### (Positive electrode composition)

A positive electrode composition of the present embodiment contains a conductive material, an active material, a binding material, a dispersing agent for a conductive material, and a liquid medium. The positive electrode composition of the present embodiment is a dispersion solution for forming a positive electrode, and can also be called a positive electrode-forming composition, a positive electrode-forming dispersion solution, or a positive electrode-forming coating solution.

In the positive electrode composition of the present embodiment, the conductive material includes carbon black having a BET specific surface area of 100 to 500 m²/g and carbon nanotubes. In addition, in the positive electrode composition of the present embodiment, the dispersing agent for a conductive material includes two or more dispersing agents having different SP values.

According to the positive electrode composition of the present embodiment, a lithium ion secondary battery having low internal resistance and excellent discharge rate characteristics and cycle characteristics is realized.

In the present embodiment, carbon black and carbon nanotubes are conductive materials. The basic role of the conductive material is to impart conductivity to an active material with poor conductivity. In addition, in the lithium ion secondary battery, since the active material expands and contracts through repeated charging and discharging, the contacts within the active material are gradually lost, but the conductive material also has a role of connecting active material that has lost its contacts and preventing loss of conductivity.

According to the findings by the inventors, it is thought that, in the positive electrode composition of the present embodiment, when two or more dispersing agents for a conductive material having different SP values are contained, carbon black and carbon nanotubes, which are conductive materials, are dispersed in a suitable dispersed state in the positive electrode composition. Here, when poor dispersion of the conductive material occurs, problems that the active material and the conductive material cannot make sufficient contacts, it is difficult to form conduction paths, and it is not possible to bring out sufficient performance of the active material. As a result, it is thought that, because parts with poor conductivity appear locally within the positive electrode, the active material is not sufficiently used, the discharging capacity decreases, and the lifespan of the battery is shortened. On the other hand, it is thought that, in the positive electrode composition of the present embodiment, since the conductive material is dispersed in a suitable dispersed state, the above problems do not occur, and excellent discharge rate characteristics and cycle characteristics are realized.

The carbon black may be carbon black used as a general conductive material for batteries, and may be acetylene black, furnace black, channel black or the like. The carbon black is preferably acetylene black because it enables excellent purity and excellent battery characteristics to be easily obtained.

The BET specific surface area of carbon black is 100 m²/g or more. When the BET specific surface area of carbon black is 100 m²/g or more, the number of electrical contacts between the active material and the conductive material increases, and the effect of imparting conductivity becomes better, better battery characteristics are obtained. In order to further reduce the internal resistance and further improve discharge rate characteristics and cycle characteristics, the BET specific surface area of carbon black is preferably 120 m²/g or more, more preferably 140 m²/g or more, and still more preferably 160 m²/g or more, and may be 180 m²/g or more, 200 m²/g or more or 220 m²/g or more.

In addition, the BET specific surface area of carbon black is 500 m²/g or less. When the BET specific surface area of carbon black is 500 m²/g or less, interaction between the liquid medium and the conductive material and interaction within the conductive material become weak, and carbon black becomes uniformly and easily dispersed in the active material. Thereby, conduction paths are more easily formed, and better battery characteristics are obtained. In order to further reduce the internal resistance and further improve discharge rate characteristics and cycle characteristics, the BET specific surface area of carbon black is preferably 450 m²/g or less, more preferably 400 m²/g or less, and may be 350 m²/g or less, 300 m²/g or less or 250 m²/g or less.

That is, the BET specific surface area of carbon black may be, for example, 100 to 500 m²/g, 100 to 450 m²/g, 100 to 400 m²/g, 100 to 350 m²/g, 100 to 300 m²/g, 100 to 250 m²/g, 120 to 500 m²/g, 120 to 450 m²/g, 120 to 400 m²/g, 120 to 350 m²/g, 120 to 300 m²/g, 120 to 250 m²/g, 140 to 500 m²/g, 140 to 450 m²/g, 140 to 400 m²/g, 140 to 350 m²/g, 140 to 300 m²/g, 140 to 250 m²/g, 160 to 500 m²/g, 160 to 450 m²/g, 160 to 400 m²/g, 160 to 350 m²/g, 160 to 300 m²/g, 160 to 250 m²/g, 180 to 500 m²/g, 180 to 450 m²/g, 180 to 400 m²/g, 180 to 350 m²/g, 180 to 300 m²/g, 180 to 250 m²/g, 200 to 500 m²/g, 200 to 450 m²/g, 200 to 400 m²/g, 200 to 350 m²/g, 200 to 300 m²/g, 200 to 250 m²/g, 220 to 500 m²/g, 220 to 450 m²/g, 220 to 400 m²/g, 220 to 350 m²/g, 220 to 300 m²/g or 220 to 250 m²/g.

The BET specific surface area of carbon black can be measured by a static capacitance method according to JIS Z 8830 using nitrogen as an adsorbate.

The crystallite size (Lc) of carbon black is preferably 15 Å or more. When the crystallite size (Lc) is 15 Å or more, π electrons move easily through the crystal layer, conduction paths through which electrons having flowed from the current collector move to the active material are more easily formed, and better battery characteristics are obtained. The crystallite size (Lc) of carbon black may be 16 Å or more, 18 Å or more, or 20 Å or more.

In addition, the crystallite size (Lc) of carbon black is preferably 26 Å or less. When the crystallite size (Lc) is 26 Å or less, since the particle shape of carbon black becomes more rounded easily, interaction between particles become weak, carbon black becomes more uniformly and easily dispersed in the active material, and thus conduction paths are more easily formed, and better battery characteristics are obtained. In order to further reduce the internal resistance and further improve discharge rate characteristics and cycle characteristics, the crystallite size (Lc) of carbon black is preferably 24 Å or less, and may be 22 Å or less or 20 Å or less.

That is, the crystallite size (Lc) of carbon black may be, for example, 15 to 26 Å, 15 to 24 Å, 15 to 22 Å, 15 to 20 Å, 16 to 26 Å, 16 to 24 Å, 16 to 22 Å, 16 to 20 Å, 18 to 26 Å, 18 to 24 Å, 18 to 22 Å, 18 to 20 Å, 20 to 26 Å, 20 to 24 Å or 20 to 22 Å.

The crystallite size (Lc) of carbon black is measured according to JIS R 7651. Here, the crystallite size (Lc) of carbon black is the crystallite size of the carbon black crystal layer in the c-axis direction.

The average primary particle size of carbon black is preferably 15 nm or more. When the average primary particle size of carbon black is 15 nm or more, interaction between the liquid medium and the conductive material and interaction within the conductive material become weak, and thus carbon black is more easily and uniformly dispersed in the active material, conduction paths are more easily formed, and excellent battery characteristics are more easily obtained. The average primary particle size of carbon black may be 16 nm or more, 17 nm or more, 18 nm or more, 19 nm or more or 20 nm or more.

In addition, the average primary particle size of carbon black is preferably 30 nm or less. When the average primary particle size of carbon black is 30 nm or less, since the number of electrical contacts between the active material and the conductive material increases, and the effect of imparting conductivity is improved, excellent battery characteristics are more easily obtained. In order to further reduce the internal resistance and further improve discharge rate characteristics and cycle characteristics, the average primary particle size of carbon black is preferably 28 nm or less, and may be 26 nm or less, 24 nm or less, 22 nm or less or 20 nm or less.

That is, the average primary particle size of carbon black may be, for example, 15 to 30 nm, 15 to 28 nm, 15 to 26 nm, 15 to 24 nm, 15 to 22 nm, 15 to 20 nm, 16 to 30 nm, 16 to 28 nm, 16 to 26 nm, 16 to 24 nm, 16 to 22 nm, 16 to 20 nm, 17 to 30 nm, 17 to 28 nm, 17 to 26 nm, 17 to 24 nm, 17 to 22 nm, 17 to 20 nm, 18 to 30 nm, 18 to 28 nm, 18 to 26 nm, 18 to 24 nm, 18 to 22 nm, 18 to 20 nm, 19 to 30 nm, 19 to 28 nm, 19 to 26 nm, 19 to 24 nm, 19 to 22 nm, 19 to 20 nm, 20 to 30 nm, 20 to 28 nm, 20 to 26 nm, 20 to 24 nm or 20 to 22 nm.

The average primary particle size of carbon black is an average value of circle-equivalent diameters measured based on the image when carbon black is observed under a transmission electron microscope (TEM), and specifically, it is obtained by taking 10 images of carbon black at a magnification of 100,000 under a transmission electron microscope JEM-2000FX (commercially available from JEOL Ltd.), measuring the circle-equivalent diameters of 200 randomly extracted carbon black primary particles in the obtained images by image analysis, and performing arithmetic averaging.

When the peak area of the peak at mass number m/z 57 is S₁ and the peak area of the peak at mass number m/z 128 is S₂, which are detected by a carbon black thermal desorption gas analysis method, the ratio (S₂/S₁) of the peak area S₂ to the peak area S₁ is preferably 0.2 to 1.9. The ratio (S₂/S₁) is a proportion of organic components adsorbed on the surface of carbon black. When the ratio (S₂/S₁) is 1.9 or less, the amount of organic components adsorbed on the surface of carbon black is sufficiently reduced, and a decrease in conductivity caused by the organic components trapping π electrons is significantly reduced. In addition, when the ratio (S₂/S₁) is 0.2 or more, the organic components adsorbed on the surface of carbon black have a role of a dispersing agent, and the dispersibility in the liquid medium is improved, and thus the viscosity of the slurry is further reduced. The peak area S₁ of the peak at mass number m/z 57 and the peak area S₂ of the peak at mass number m/z 128 can be measured by generated gas mass analysis (EGA-MS). For example, carbon black is set in a gas chromatography-mass spectrometer including a thermal decomposition device and left at 50°C for 5 minutes in an atmospheric pressure He flow, and then heated to 800°C at 80°C/min, components desorbed by heating are subjected to mass analysis, and thus the peak area S₁ of the peak at mass number m/z 57 and the peak area S₂ of the peak at mass number m/z 128 can be measured.

In order to further reduce the internal resistance and further improve discharge rate characteristics and cycle characteristics, the ratio (S₂/S₁) may be 1.5 or less, 1.0 or less, 0.8 or less, 0.6 or less, 0.5 or less, 0.4 or less, or 0.3 or less. In addition, the ratio (S₂/S₁) may be 0.25 or more or 0.3 or more.

That is, the ratio (S₂/S₁) may be, for example, 0.2 to 1.9, 0.2 to 1.5, 0.2 to 1.0, 0.2 to 0.8, 0.2 to 0.6, 0.2 to 0.5, 0.2 to 0.4, 0.2 to 0.3, 0.25 to 1.9, 0.25 to 1.5, 0.25 to 1.0, 0.25 to 0.8, 0.25 to 0.6, 0.25 to 0.5, 0.25 to 0.4, 0.25 to 0.3, 0.3 to 1.9, 0.3 to 1.5, 0.3 to 1.0, 0.3 to 0.8, 0.3 to 0.6, 0.3 to 0.5 or 0.3 to 0.4.

The volume resistivity of carbon black may be 0.30 Ω·cm or less or 0.25 Ω·cm or less in order to obtain excellent conductivity. The volume resistivity of carbon black is measured, for example, in a compressed state under a load of 7.5 MPa.

The ash content and the water content of carbon black are not particularly limited. The ash content of carbon black may be, for example, 0.04 mass% or less, and the water content of carbon black may be, for example, 0.10 mass% or less.

A method of producing carbon black is not particularly limited. For example, carbon black may be produced by a production method including a synthesis process in which a raw material gas containing hydrocarbons is treated in a cylindrical decomposition furnace to obtain carbon black and a purity increasing process in which magnetic foreign substances are removed using a magnet from the carbon black obtained in the synthesis process.

In the synthesis process, a raw material gas is treated in a cylindrical decomposition furnace. The cylindrical decomposition furnace may include, for example, a thermal decomposition unit configured to perform a thermal decomposition reaction of hydrocarbons and an aging unit configured to modify a thermal decomposition reaction product. The cylindrical decomposition furnace may further include a supply port for supplying a raw material gas to the thermal decomposition unit and a recovery port for recovering carbon black produced from the aging unit.

In the thermal decomposition unit, it is preferable that the supplied raw material gas remain at a temperature of 1,900°C or higher for 30 to 150 seconds. When the residence time of the raw material gas is 30 seconds or longer, it is possible to more reliably complete the thermal decomposition reaction and form a carbon aerosol by developing a chain structure. In addition, when the residence time of the raw material gas is 150 seconds or shorter, since aggregation of the carbon aerosol is inhibited, magnetic foreign substances are more easily removed in the purity increasing process, and carbon black with high purity is easily obtained.

In the aging unit, it is preferable that the thermal decomposition reaction product supplied from the thermal decomposition unit remain at a temperature of 1,700°C or higher for 20 to 90 seconds. When the residence time of the thermal decomposition reaction product is 20 seconds or longer, the carbon aerosol is modified and the development of aggregation is promoted, and thus carbon black with higher quality is easily obtained. In addition, when the residence time of the thermal decomposition reaction product is 90 seconds or shorter, since aggregation of the carbon aerosol is inhibited, magnetic foreign substances are more easily removed in the purity increasing process, and carbon black with high purity is easily obtained.

The residence times in the thermal decomposition unit and the aging unit each can be appropriately adjusted by adjusting the gas linear velocity of the flowing gas. The residence time in the aging unit is preferably shorter than the residence time in the thermal decomposition unit. That is, the gas linear velocity in the aging unit is preferably higher than the gas linear velocity in the thermal decomposition unit.

In the present embodiment, it is preferable that the raw material gas contain acetylene as a carbon source. The content of the carbon source (for example, acetylene) in the raw material gas is, for example, 10 vol% or more, preferably 20 vol% or more, and more preferably 30 vol% or more, and may be 100 vol%. Here, the content of each component in the raw material gas is a volume proportion based on the volume at 100°C and 1 atm.

The raw material gas may further contain hydrocarbons other than the carbon source (for example, acetylene). Examples of other hydrocarbons include methane, ethane, propane, ethylene, propylene, butadiene, benzene, toluene, xylene, gasoline, kerosene, light oil, and heavy oil. When these other hydrocarbons are added, the reaction temperature can be changed to increase or decrease the specific surface area of carbon black. The other hydrocarbons are preferably selected from the group consisting of aromatic hydrocarbons such as benzene and toluene and unsaturated hydrocarbons such as ethylene and propylene.

When the raw material gas contains acetylene and other hydrocarbons, the content of other hydrocarbons with respect to 100 parts by volume of acetylene is, for example, 0.1 to 99 parts by volume, preferably 0.2 to 50 parts by volume, and more preferably 0.3 to 30 parts by volume.

That is, the content of other hydrocarbons with respect to 100 parts by volume of acetylene may be, for example, 0.1 to 99 parts by volume, 0.1 to 50 parts by volume, 0.1 to 30 parts by volume, 0.2 to 99 parts by volume, 0.2 to 50 parts by volume, 0.2 to 30 parts by volume, 0.3 to 99 parts by volume, 0.3 to 50 parts by volume or 0.3 to 30 parts by volume.

The raw material gas may further contain a water vapor gas, oxygen gas, hydrogen gas, carbon dioxide gas and the like. As such a gas, it is preferable to use a high purity gas of 99.9 vol% or more. When such a high purity gas is used, carbon black with less magnetic foreign substances and a stable BET specific surface area and oil absorption amount tends to be easily produced.

The content of the water vapor gas with respect to 100 parts by volume of the carbon source (for example, acetylene) in the raw material gas may be, for example, 0 to 80 parts by volume, and is preferably 0.1 to 70 parts by volume, more preferably 1 to 60 parts by volume, and still more preferably 3 to 55 parts by volume. When the content of the water vapor gas is within the above range, the BET specific surface area of carbon black tends to become larger.

That is, the content of the water vapor gas with respect to 100 parts by volume of the carbon source (for example, acetylene) in the raw material gas may be, for example, 0 to 80 parts by volume, 0 to 70 parts by volume, 0 to 60 parts by volume, 0 to 55 parts by volume, 0.1 to 80 parts by volume, 0.1 to 70 parts by volume, 0.1 to 60 parts by volume, 0.1 to 55 parts by volume, 1 to 80 parts by volume, 1 to 70 parts by volume, 1 to 60 parts by volume, 1 to 55 parts by volume, 3 to 80 parts by volume, 3 to 70 parts by volume, 3 to 60 parts by volume or 3 to 55 parts by volume.

In the synthesis process, it is preferable to supply oxygen gas together with the raw material gas to the thermal decomposition unit, and it is more preferable to supply oxygen gas to the thermal decomposition unit by injecting oxygen gas from around the supply port for supplying the raw material gas to the thermal decomposition unit.

The cylindrical decomposition furnace preferably has an oxygen gas injection port near the raw material gas supply port, and more preferably has a plurality of injection ports provided at uniform intervals so that they surround the supply port. The number of injection ports is preferably 3 or more and more preferably 3 to 8.

In addition, the cylindrical decomposition furnace may include a nozzle having a multi-tube structure (for example, a double-tube structure, a triple-tube structure, etc.) having a raw material gas supply port and an injection port for injecting oxygen gas from around the supply port. In the case of a double-tube structure, for example, the raw material gas may be injected from the gap part on the inner cylinder side, and oxygen gas may be injected from the gap part on the outer cylinder side. In the case of a triple-tube structure including an inner tube, an intermediate tube and an outer tube, for example, oxygen gas may be injected from the gap part formed by the outer wall of the intermediate tube and the inner wall of the outer tube, and the raw material gas may be injected from the remaining gap part.

The amount of oxygen gas injected is not particularly limited unless the production yield of carbon black is considered. Carbon black can be produced even if an amount of oxygen gas larger than necessary is injected. The amount of oxygen gas injected with respect to 100 parts by volume of the carbon source (for example, acetylene) in the raw material gas may be, for example, 0 to 300 parts by volume, 0 to 250 parts by volume, 0 to 220 parts by volume or 0 to 200 parts by volume, and is preferably 0.1 to 190 parts by volume, more preferably 0.5 to 180 parts by volume, and still more preferably 1 to 160 parts by volume. When the amount of oxygen gas injected increases, the BET specific surface area of carbon black, and the ratio (S₁/S₂) tend to become larger, and when the amount of oxygen gas injected decreases, the primary particle size of carbon black tends to become larger.

That is, the amount of oxygen gas injected with respect to 100 parts by volume of the carbon source (for example, acetylene) in the raw material gas may be, for example, 0 to 300 parts by volume, 0 to 250 parts by volume, 0 to 220 parts by volume, 0 to 200 parts by volume, 0 to 190 parts by volume, 0 to 180 parts by volume, 0 to 160 parts by volume, 0.1 to 300 parts by volume, 0.1 to 250 parts by volume, 0.1 to 220 parts by volume, 0.1 to 200 parts by volume, 0.1 to 190 parts by volume, 0.1 to 180 parts by volume, 0.1 to 160 parts by volume, 0.5 to 300 parts by volume, 0.5 to 250 parts by volume, 0.5 to 220 parts by volume, 0.5 to 200 parts by volume, 0.5 to 190 parts by volume, 0.5 to 180 parts by volume, 0.5 to 160 parts by volume, 1 to 300 parts by volume, 1 to 250 parts by volume, 1 to 220 parts by volume, 1 to 200 parts by volume, 1 to 190 parts by volume, 1 to 180 parts by volume or 1 to 160 parts by volume.

In the synthesis process, for example, when the addition rate of hydrocarbons other than acetylene, the amount of oxygen gas injected and the like are adjusted, it is possible to adjust the primary particle size, the BET specific surface area, and the crystallite size (Lc) of the obtained carbon black.

The purity increasing process is a process in which magnetic foreign substances are removed using a magnet from the carbon black obtained in the synthesis process. The purity increasing process may be, for example, a process in which the carbon black obtained in the synthesis process is brought into contact with a magnet or placed near the magnet (for example, passing near the magnet), and magnetic foreign substances are removed from carbon black.

The maximum surface magnetic flux density of the magnet is not particularly limited, and may be, for example, 700 mT or more, and is preferably 1,000 mT or more and more preferably 1200 mT or more. Thereby, fine magnetic foreign substances adhered to carbon black are adsorbed more firmly, and thus carbon black with a lower nickel content is easily obtained. The upper limit of the maximum surface magnetic flux density of the magnet is not particularly limited, and may be, for example, 1,400 mT or less.

That is, the maximum surface magnetic flux density of the magnet may be, for example, 700 to 1,400 mT, 1,000 to 1,400 mT or 1,200 to 1,400 mT.

The purity increasing process may be a process in which magnetic foreign substances are removed from carbon black so that the nickel content is 50 ppb or less (preferably 40 ppb or less, more preferably 30 ppb or less, and still more preferably 20 ppb or less). The lower limit of the nickel content is not particularly limited, and the nickel content in carbon black may be, for example, 1 ppb or more, and in consideration of cost and productivity, it may be 10 ppb or more, or 15 ppb or more.

That is, the nickel content in carbon black after the purity increasing process may be, for example, 1 to 50 ppb, 1 to 40 ppb, 1 to 30 ppb, 1 to 20 ppb, 10 to 50 ppb, 10 to 40 ppb, 10 to 30 ppb, 10 to 20 ppb, 15 to 50 ppb, 15 to 40 ppb, 15 to 30 ppb or 15 to 20 ppb.

The content (C₁) of carbon black based on a total mass of the solid content in the positive electrode composition may be, for example, 0.01 mass% or more, 0.05 mass% or more, 0.1 mass% or more, 0.2 mass% or more, 0.3 mass% or more, 0.4 mass% or more or 0.5 mass% or more. The content (C₁) of carbon black based on a total mass of the solid content in the positive electrode composition may be, for example, 10 mass% or less, 7 mass% or less, 5 mass% or less, 4 mass% or less, 3 mass% or less or 2 mass% or less.

That is, the content (C₁) of carbon black based on a total mass of the solid content in the positive electrode composition may be, for example, 0.01 to 10 mass%, 0.01 to 7 mass%, 0.01 to 5 mass%, 0.01 to 4 mass%, 0.01 to 3 mass%, 0.01 to 2 mass%, 0.05 to 10 mass%, 0.05 to 7 mass%, 0.05 to 5 mass%, 0.05 to 4 mass%, 0.05 to 3 mass%, 0.05 to 2 mass%, 0.1 to 10 mass%, 0.1 to 7 mass%, 0.1 to 5 mass%, 0.1 to 4 mass%, 0.1 to 3 mass%, 0.1 to 2 mass%, 0.2 to 10 mass%, 0.2 to 7 mass%, 0.2 to 5 mass%, 0.2 to 4 mass%, 0.2 to 3 mass%, 0.2 to 2 mass%, 0.3 to 10 mass%, 0.3 to 7 mass%, 0.3 to 5 mass%, 0.3 to 4 mass%, 0.3 to 3 mass%, 0.3 to 2 mass%, 0.4 to 10 mass%, 0.4 to 7 mass%, 0.4 to 5 mass%, 0.4 to 4 mass%, 0.4 to 3 mass%, 0.4 to 2 mass%, 0.5 to 10 mass%, 0.5 to 7 mass%, 0.5 to 5 mass%, 0.5 to 4 mass%, 0.5 to 3 mass% or 0.5 to 2 mass%.

As the carbon nanotubes, carbon nanotubes having an average diameter of 5 to 15 nm and a ratio of the average diameter to the BET specific surface area (average diameter/BET specific surface area) of 0.01 to 0.068 nm/(m²/g) are preferable. When the average diameter of carbon nanotubes is as small as 5 to 15 nm and the ratio of the average diameter to the BET specific surface area is 0.01 to 0.068 nm/(m²/g), more conduction paths can be formed in the positive electrode.

The average diameter of carbon nanotubes is preferably 5 nm or more. When the average diameter of carbon nanotubes is 5 nm or more, interaction between the liquid medium and the conductive material and interaction within the conductive material become weak, and carbon nanotubes are more uniformly and easily dispersed in the active material. Thereby, conduction paths are more easily formed, and better battery characteristics are obtained. The average diameter of carbon nanotubes may be 6 nm or more.

In addition, the average diameter of carbon nanotubes is preferably 15 nm or less. When the average diameter of carbon nanotubes is 15 nm or less, the number of electrical contacts between the active material and the conductive material increases, the effect of imparting conductivity is improved, and better battery characteristics are easily obtained. In order to further reduce the internal resistance and further improve discharge rate characteristics and cycle characteristics, the average diameter of carbon nanotubes is preferably 12 nm or less, and more preferably 10 nm or less, and may be 9 nm or less, 8 nm or less or 7 nm or less.

That is, the average diameter of carbon nanotubes may be 5 to 15 nm, 5 to 12 nm, 5 to 10 nm, 5 to 9 nm, 5 to 8 nm, 5 to 7 nm, 6 to 15 nm, 6 to 12 nm, 6 to 10 nm, 6 to 9 nm, 6 to 8 nm or 6 to 7 nm.

The average diameter of carbon nanotubes is an average value of diameters measured based on images of carbon nanotubes observed under a transmission electron microscope (TEM), and specifically, it is obtained by taking 10 images of carbon nanotubes at a magnification of 200,000 under a transmission electron microscope JEM-2000FX (commercially available from JEOL Ltd.), measuring the diameters of 100 randomly extracted carbon nanotubes in the obtained images by image analysis, and performing arithmetic averaging.

The BET specific surface area of the carbon nanotubes is preferably 170 to 320 m²/g. When the BET specific surface area of the carbon nanotubes is 170 m²/g or more, since the number of electrical contacts between the active material and the conductive material increases, and the effect of imparting conductivity is improved, it becomes easier to obtain excellent battery characteristics. When the BET specific surface area of the carbon nanotubes is 320 m²/g or less, the carbon nanotubes are more easily and uniformly dispersed, conduction paths are more easily formed, and better battery characteristics are easily obtained. The BET specific surface area of the carbon nanotubes can be measured by a static capacitance method according to JIS Z 8830 using nitrogen as an adsorbate.

In order to further reduce the internal resistance and further improve discharge rate characteristics and cycle characteristics, the BET specific surface area of the carbon nanotubes may be 180 m²/g or more, 200 m²/g or more, 230 m²/g or more, 250 m²/g or more, 280 m²/g or more, or 300 m²/g or more. In order to further reduce the internal resistance and further improve discharge rate characteristics and cycle characteristics, the BET specific surface area of the carbon nanotubes may be 300 m²/g or less.

That is, the BET specific surface area of the carbon nanotubes may be, for example, 170 to 320 m²/g, 170 to 300 m²/g, 180 to 320 m²/g, 180 to 300 m²/g, 200 to 320 m²/g, 200 to 300 m²/g, 230 to 320 m²/g, 230 to 300 m²/g, 250 to 320 m²/g, 250 to 300 m²/g, 280 to 320 m²/g, 280 to 300 m²/g or 300 to 320 m²/g.

The ratio of the average diameter to the BET specific surface area of the carbon nanotubes (average diameter/BET specific surface area) is preferably 0.01 to 0.068 nm/(m²/g). The ratio (average diameter/BET specific surface area) is a value obtained by dividing the average diameter of the carbon nanotubes by the BET specific surface area of the carbon nanotubes. When the ratio (average diameter/BET specific surface area) is 0.01 nm/(m²/g) or more, carbon nanotubes are less entangled with each other, and are more uniformly and easily dispersed in the active material. Thereby, conduction paths are more easily formed, and better battery characteristics are obtained. When the ratio (average diameter/BET specific surface area) is 0.068 nm/(m²/g) or less, the number of carbon nanotubes per unit weight increases, electricity is allowed to flow more efficiently throughout the active material, and thus better battery characteristics are obtained.

In order to further reduce the internal resistance and further improve discharge rate characteristics and cycle characteristics, the ratio (average diameter/BET specific surface area) may be 0.06 nm/(m²/g) or less, 0.04 nm/(m²/g) or less, 0.03 nm/(m²/g) or less, or 0.02 nm/(m²/g) or less. In order to further reduce the internal resistance and further improve discharge rate characteristics and cycle characteristics, the ratio (average diameter/BET specific surface area) may be 0.02 nm/(m²/g) or more.

That is, the ratio (average diameter/BET specific surface area) may be, for example, 0.01 to 0.068 nm/(m²/g), 0.01 to 0.06 nm/(m²/g), 0.01 to 0.04 nm/(m²/g), 0.01 to 0.03 nm/(m²/g), 0.01 to 0.02 nm/(m²/g), 0.02 to 0.068 nm/(m²/g), 0.02 to 0.06 nm/(m²/g), 0.02 to 0.04 nm/(m²/g) or 0.02 to 0.03 nm/(m²/g).

A method of producing carbon nanotubes is not particularly limited. Carbon nanotubes may be produced by, for example, a conventionally known carbon nanotube producing method.

Carbon nanotubes can be produced, for example, by placing a powder catalyst in which iron is supported on magnesia (magnesium oxide) over the entire surface of a reaction container in a vertical reaction container in the horizontal cross-section direction, causing methane to flow within the reaction container in the vertical direction, bringing methane into contact with the catalyst at 500 to 1,200°C, and then oxidizing the obtained product (unoxidized carbon nanotubes). By such a method of producing carbon nanotubes, carbon nanotubes made of several graphene layers, having an average diameter of 5 to 15 nm, and a BET specific surface area of 160 to 300 m²/g are easily obtained.

The oxidation treatment of the product may be, for example, a firing treatment. The temperature of the firing treatment is not particularly limited, and may be, for example, 300 to 1,000°C. Since the temperature of the firing treatment is affected by the atmospheric gas, it is preferable to perform the firing treatment at a relatively low temperature when the oxygen concentration is high and at a relatively high temperature when the oxygen concentration is low. Specifically, as the firing treatment of the product, a method of firing the product in the atmosphere within a range of a combustion peak temperature±50°C of carbon nanotubes before the oxidation treatment may be exemplified, but when the oxygen concentration is higher than that of the atmosphere, firing is performed in a temperature range lower than the firing peak temperature, and when the oxygen concentration is lower than that of the atmosphere, a temperature range higher than the firing peak temperature is selected. Particularly, when the firing treatment is performed on carbon nanotubes before the oxidation treatment in the atmosphere, firing is preferably performed in a range of a combustion peak temperature±15°C of carbon nanotubes before the oxidation treatment.

The oxidation treatment of the product may be a treatment with hydrogen peroxide, a mixed acid, nitric acid or the like. As a method of treating the product with hydrogen peroxide, for example, a method in which the product is mixed in a 34.5% hydrogen peroxide solution so that the concentration is 0.01 to 10 mass%, and reacted at a temperature of 0 to 100°C for 0.5 to 48 hours may be exemplified. In addition, as a method of treating the product with a mixed acid, for example, a method in which the product is mixed in a mixed solution containing concentrated sulfuric acid and concentrated nitric acid (concentrated sulfuric acid:concentrated nitric acid=3:1) so that the concentration is 0.01 to 10 mass%, and reacted at a temperature of 0 to 100°C for 0.5 to 48 hours may be exemplified. The mixing ratio of the mixed acid (concentrated sulfuric acid:concentrated nitric acid) can be adjusted within a range of 1:10 to 10:1 according to the amount of single-walled carbon nanotubes in the product. As a method of treating the product with nitric acid, for example, a method in which the product is mixed in nitric acid with a concentration of 40 to 80 mass% so that the concentration is 0.01 to 10 mass%, and reacted at a temperature of 60 to 150°C for 0.5 to 48 hours may be exemplified.

When the oxidation treatment is performed on the product, impurities such as amorphous carbon and single-walled carbon nanotubes with low heat resistance in the product can be selectively removed, and it is possible to improve the purity of carbon nanotubes made of several graphene layers, particularly, 2 to 5 graphene layers. At the same time, when the oxidation treatment is performed on the product, since functional groups are added to the surface of carbon nanotubes, the affinity with the liquid medium and the additive is improved, and the dispersibility is improved. Among the above oxidation treatment, a treatment using nitric acid is preferable.

The oxidation treatment may be performed immediately after carbon nanotubes are obtained before the oxidation treatment, or may be performed after another purification treatment. For example, when iron/magnesia is used as a catalyst, the oxidation treatment may be performed after the purification treatment with an acid such as hydrochloric acid in order to remove the catalyst before the oxidation treatment, or the purification treatment may be performed in order to remove the catalyst after the oxidation treatment is performed.

The content (C₂) of carbon nanotubes based on a total mass of the solid content in the positive electrode composition may be, for example, 0.01 mass% or more, and in order to further reduce the internal resistance of the battery and further improve discharge rate characteristics and cycle characteristics, the content may be 0.03 mass% or more, 0.05 mass% or more, 0.07 mass% or more, 0.1 mass% or more or 0.2 mass% or more. In addition, the content (C₂) of carbon nanotubes based on a total mass of the solid content in the positive electrode composition may be, for example, 5 mass% or less, and may be 3 mass% or less, 2 mass% or less, 1 mass% or less, 0.9 mass% or less, 0.8 mass% or less or 0.7 mass% or less.

That is, the content (C₂) of carbon nanotubes based on a total mass of the solid content in the positive electrode composition may be, for example, 0.01 to 5 mass%, 0.01 to 3 mass%, 0.01 to 2 mass%, 0.01 to 1 mass%, 0.01 to 0.9 mass%, 0.01 to 0.8 mass%, 0.01 to 0.7 mass%, 0.03 to 5 mass%, 0.03 to 3 mass%, 0.03 to 2 mass%, 0.03 to 1 mass%, 0.03 to 0.9 mass%, 0.03 to 0.8 mass%, 0.03 to 0.7 mass%, 0.05 to 5 mass%, 0.05 to 3 mass%, 0.05 to 2 mass%, 0.05 to 1 mass%, 0.05 to 0.9 mass%, 0.05 to 0.8 mass%, 0.05 to 0.7 mass%, 0.07 to 5 mass%, 0.07 to 3 mass%, 0.07 to 2 mass%, 0.07 to 1 mass%, 0.07 to 0.9 mass%, 0.07 to 0.8 mass%, 0.07 to 0.7 mass%, 0.1 to 5 mass%, 0.1 to 3 mass%, 0.1 to 2 mass%, 0.1 to 1 mass%, 0.1 to 0.9 mass%, 0.1 to 0.8 mass%, 0.1 to 0.7 mass%, 0.2 to 5 mass%, 0.2 to 3 mass%, 0.2 to 2 mass%, 0.2 to 1 mass%, 0.2 to 0.9 mass%, 0.2 to 0.8 mass% or 0.2 to 0.7 mass%.

A total content (C₁+C₂) of carbon black and carbon nanotubes based on a total mass of the solid content in the positive electrode composition may be, for example, 0.5 mass% or more, and in order to further reduce the internal resistance of the battery and further improve discharge rate characteristics and cycle characteristics, the total content may be 0.75 mass% or more, 1.0 mass% or more or 2.0 mass% or more. In addition, a total content (C₁+C₂) of carbon black and carbon nanotubes based on a total mass of the solid content in the positive electrode composition may be, for example, 5.0 mass% or less, and in order to increase the dispersibility of the conductive material in the positive electrode composition, the total content may be 4.5 mass% or less, 3.5 mass% or less or 3.0 mass% or less.

That is, a total content (C₁+C₂) of carbon black and carbon nanotubes based on a total mass of the solid content in the positive electrode composition may be, for example, 0.5 to 5.0 mass%, 0.5 to 4.5 mass%, 0.5 to 3.5 mass%, 0.5 to 3.0 mass%, 0.75 to 5.0 mass%, 0.75 to 4.5 mass%, 0.75 to 3.5 mass%, 0.75 to 3.0 mass%, 1.0 to 5.0 mass%, 1.0 to 4.5 mass%, 1.0 to 3.5 mass%, 1.0 to 3.0 mass%, 2.0 to 5.0 mass%, 2.0 to 4.5 mass%, 2.0 to 3.5 mass% or 2.0 to 3.0 mass%.

A ratio (C₂/(C₁+C₂)) of the content (C₂) of carbon nanotubes to a total content (C₁+C₂) of carbon black and carbon nanotubes may be, for example, 0.05 or more, and in order to further reduce the internal resistance of the battery and further improve discharge rate characteristics and cycle characteristics, the ratio may be 0.07 or more, 0.1 or more, 0.2 or more or 0.3 or more.

In addition, a ratio (C₂/(C₁+C₂)) of the content (C₂) of carbon nanotubes to a total content (C₁+C₂) of carbon black and carbon nanotubes may be, for example, 0.8 or less, and in order to increase the dispersibility of the conductive material in the positive electrode composition, the ratio may be 0.75 or less, 0.7 or less, 0.6 or less or 0.5 or less.

That is, a ratio (C₂/(C₁+C₂)) of the content (C₂) of carbon nanotubes to a total content (C₁+C₂) of carbon black and carbon nanotubes may be, for example, 0.05 to 0.8, 0.05 to 0.75, 0.05 to 0.7, 0.05 to 0.6, 0.05 to 0.5, 0.07 to 0.8, 0.07 to 0.75, 0.07 to 0.7, 0.07 to 0.6, 0.07 to 0.5, 0.1 to 0.8, 0.1 to 0.75, 0.1 to 0.7, 0.1 to 0.6, 0.1 to 0.5, 0.2 to 0.8, 0.2 to 0.75, 0.2 to 0.7, 0.2 to 0.6, 0.2 to 0.5, 0.3 to 0.8, 0.3 to 0.75, 0.3 to 0.7, 0.3 to 0.6 or 0.3 to 0.5.

The positive electrode composition of the present embodiment may further contain a conductive material other than carbon black and carbon nanotubes. Examples of other conductive materials include ketjenblack, graphite, graphene, activated carbon, and fullerene.

The content of the other conductive material based on a total amount of the conductive material may be, for example, 10 mass% or less, 5 mass% or less, 3 mass% or less, 1 mass% or less or 0.5 mass% or less, or 0 mass%. That is, a total amount of carbon black and carbon nanotubes in the conductive material based on a total amount of the conductive material may be, for example, 90 mass% or more, 95 mass% or more, 97 mass% or more, 99 mass% or more or 99.5 mass% or more, or 100 mass%.

The active material may any material that can reversibly occlude and release cations. The active material can also be called a positive electrode active material. The active material may be, for example, a lithium-containing composite oxide containing manganese with a volume resistivity of 1×10⁴Ω·cm or more or a lithium-containing polyanionic compound. Examples of lithium-containing composite oxides containing manganese include lithium manganates such as LiMnO₂, LiMnO₃, LiMn₂O₃, and Li₁₋ₓMn₂₋ₓO₄ (where, x=0 to 0.33); and composite oxides containing one or more transition metal elements such as LiMnₓNi_{y}Co_{z}O₂ (where, x+y+z=1, 0≤y<1, 0≤z<1, 0≤x<1), Li₁₊ₓMn_{2-x-y}M_{y}O₄ (where, x=0 to 0.33, y=0 to 1.0, 2-x-y>0), LiMn₂₋ₓMₓO₂ (where, x=0.01 to 0.1), and Li₂Mn₃MO₈. Examples of lithium-containing polyanionic compounds include polyanionic compounds such as LiFePO₄, LiMnPO₄, and Li₂MPO₄F (where, M is at least one metal selected from among Co, Ni, Fe, Cr, and Zn). M in each composition formula is at least one selected from the group consisting of Fe, Co, Ni, Al, Cu, Mg, Cr, Zn, and Ta.

In order to easily obtain a battery having sufficiently excellent binding properties between the conductive material and the binding material and better cycle characteristics, the average particle size (D₅₀) of the active material may be 20 µm or less or 10 µm or less. The average particle size (D₅₀) of the active material may be 100 nm or more. The average particle size (D₅₀) of the active material can be measured by a laser light scattering method.

The content of the active material based on a total mass of the solid content in the positive electrode composition may be, for example, 80 mass% or more, and in order to further improve battery characteristics, the content is preferably 85 mass% or more, and may be 87 mass% or more, 90 mass% or more, 92 mass% or more, or 95 mass%. In addition, the content of the active material based on a total mass of the solid content in the positive electrode composition may be, for example, 99.9 mass% or less, 99.5 mass% or less, 99 mass% or less or 98 mass% or less.

That is, the content of the active material based on a total mass of the solid content in the positive electrode composition may be, for example, 80 to 99.9 mass%, 80 to 99.5 mass%, 80 to 99 mass%, 80 to 98 mass%, 85 to 99.9 mass%, 85 to 99.5 mass%, 85 to 99 mass%, 85 to 98 mass%, 87 to 99.9 mass%, 87 to 99.5 mass%, 87 to 99 mass%, 87 to 98 mass%, 90 to 99.9 mass%, 90 to 99.5 mass%, 90 to 99 mass%, 90 to 98 mass%, 92 to 99.9 mass%, 92 to 99.5 mass%, 92 to 99 mass%, 92 to 98 mass%, 95 to 99.9 mass%, 95 to 99.5 mass%, 95 to 99 mass% or 95 to 98 mass%.

Examples of binding materials include polyvinylidene fluoride, polytetrafluoroethylene, styrene-butadiene copolymers, and (meth)acrylic acid ester copolymers. The structure of the polymer of the binding material may be, for example, a random copolymer, an alternating copolymer, a graft copolymer, or a block copolymer. The binding material is preferably polyvinylidene fluoride because it has excellent voltage resistance.

The content of the binding material based on a total mass of the solid content in the positive electrode composition may be, for example, 0.3 mass% or more, and in order to further improve binding properties of the positive electrode plate and further improve cycle characteristics, the content may be 0.5 mass% or more, 1.0 mass% or more, or 1.5 mass% or more. The content of the binding material based on a total mass of the solid content in the positive electrode composition may be, for example, 5.0 mass% or less, and in order to further reduce the resistance of the positive electrode plate and further improve discharge rate characteristics, the content may be 4.5 mass% or less, 4.0 mass% or less, or 3.5 mass% or less.

That is, the content of the binding material based on a total mass of the solid content in the positive electrode composition may be, for example, 0.3 to 5.0 mass%, 0.3 to 4.5 mass%, 0.3 to 4.0 mass%, 0.3 to 3.5 mass%, 0.5 to 5.0 mass%, 0.5 to 4.5 mass%, 0.5 to 4.0 mass%, 0.5 to 3.5 mass%, 1.0 to 5.0 mass%, 1.0 to 4.5 mass%, 1.0 to 4.0 mass%, 1.0 to 3.5 mass%, 1.5 to 5.0 mass%, 1.5 to 4.5 mass%, 1.5 to 4.0 mass% or 1.5 to 3.5 mass%.

Examples of liquid media include water, N-methyl-2-pyrrolidone (hereinafter also referred to as "NMP"), cyclohexane, methyl ethyl ketone, and methyl isobutyl ketone. Among these, N-methyl-2-pyrrolidone is preferable in consideration of dispersibility.

The dispersing agent for a conductive material may be any component that has a function of assisting with dispersion of the conductive material (carbon black and carbon nanotubes) in the liquid medium.

Examples of dispersing agents for a conductive material include high-molecular-weight dispersing agents and low-molecular-weight dispersing agents, and in consideration of long-term dispersion stability of the conductive material, high-molecular-weight dispersing agents are preferable.

The positive electrode composition of the present embodiment contains, as a dispersing agent for a conductive material, two or more dispersing agents having different SP values. That is, the positive electrode composition of the present embodiment contains a first dispersing agent for a conductive material and a second dispersing agent for a conductive material having a different SP value from the first dispersing agent for a conductive material.

For example, the first dispersing agent for a conductive material may be a dispersing agent for carbon black, and the second dispersing agent for a conductive material may be a dispersing agent for carbon nanotubes. In this case, since carbon black has a lower affinity with the liquid medium than carbon nanotubes, the first dispersing agent for a conductive material is preferable because it has a higher SP value than the second dispersing agent for a conductive material. Thereby, the effect of inhibiting aggregation between carbon black and carbon nanotubes is exhibited. In order to further reduce the internal resistance of the battery and further improve discharge rate characteristics and cycle characteristics, the difference between the SP value of the first dispersing agent for a conductive material and the SP value of the second dispersing agent for a conductive material is preferably 1 J/cm³ or more, more preferably 3 J/cm³ or more, and still more preferably 5 J/cm³ or more. The difference between the SP value of the first dispersing agent for a conductive material and the SP value of the second dispersing agent for a conductive material is preferably 30 J/cm³ or less, more preferably 20 J/cm³ or less, and still more preferably 15 J/cm³ or less. That is, the difference may be 1 to 30 J/cm³, 1 to 20 J/cm³, 1 to 15 J/cm³, 3 to 30 J/cm³, 3 to 20 J/cm³, 3 to 15 J/cm³, 5 to 30 J/cm³, 5 to 20 J/cm³ or 5 to 15 J/cm³.

Here, in this specification, the SP value of the dispersing agent for a conductive material is a value calculated based on the Fedor's estimation method described in pp. 66 of "SP value: Basic, Application and Calculation method, published in 2006, JOHOKIKO. CO., LTD."

The dispersing agent for a conductive material may be, for example, a dispersing agent selected from the group consisting of polyvinyl alcohol (SP value:35 J/cm³), polyvinylpyrrolidone (SP value:25 J/cm³), polyvinyl butyral (SP value:24 J/cm³), carboxymethyl cellulose (SP value:21 J/cm³) and salts thereof (SP value:29 J/cm³), polyvinyl acetal (SP value:25 J/cm³), polyvinyl acetate (SP value:18 J/cm³), polyvinylamine (SP value:16 J/cm³) and polyvinyl formal (SP value:26 J/cm³).

A total content of the dispersing agent for a conductive material based on a total amount of the solid content of the positive electrode composition may be, for example, 0.03 mass% or more, and in order to further increase the dispersibility of the conductive material, the total content is preferably 0.04 mass% or more and more preferably 0.05 mass% or more, and may be 0.06 mass% or more, 0.07 mass% or more or 0.08 mass% or more. In addition, a total content of the dispersing agent for a conductive material based on a total amount of the solid content of the positive electrode composition may be, for example, 1.5 mass% or less, and in order to minimize a decrease in conductivity due to the insulating dispersing agent, the total content is preferably 1.0 mass% or less and more preferably 0.8 mass% or less, and may be 0.5 mass% or less, 0.3 mass% or less or 0.2 mass% or less.

That is, a total content of the dispersing agent for a conductive material based on a total amount of the solid content of the positive electrode composition may be, for example, 0.03 to 1.5 mass%, 0.03 to 1.0 mass%, 0.03 to 0.8 mass%, 0.03 to 0.5 mass%, 0.03 to 0.3 mass%, 0.03 to 0.2 mass%, 0.04 to 1.5 mass%, 0.04 to 1.0 mass%, 0.04 to 0.8 mass%, 0.04 to 0.5 mass%, 0.04 to 0.3 mass%, 0.04 to 0.2 mass%, 0.05 to 1.5 mass%, 0.05 to 1.0 mass%, 0.05 to 0.8 mass%, 0.05 to 0.5 mass%, 0.05 to 0.3 mass%, 0.05 to 0.2 mass%, 0.06 to 1.5 mass%, 0.06 to 1.0 mass%, 0.06 to 0.8 mass%, 0.06 to 0.5 mass%, 0.06 to 0.3 mass%, 0.06 to 0.2 mass%, 0.07 to 1.5 mass%, 0.07 to 1.0 mass%, 0.07 to 0.8 mass%, 0.07 to 0.5 mass%, 0.07 to 0.3 mass%, 0.07 to 0.2 mass%, 0.08 to 1.5 mass%, 0.08 to 1.0 mass%, 0.08 to 0.8 mass%, 0.08 to 0.5 mass%, 0.08 to 0.3 mass% or 0.08 to 0.2 mass%.

A total content of the first dispersing agent for a conductive material based on a total amount of the solid content of the positive electrode composition may be, for example, 0.01 mass% or more, and in order to increase the dispersibility of carbon black, the total content is preferably 0.02 mass% or more and more preferably 0.025 mass% or more, and may be 0.03 mass% or more, 0.035 mass% or more or 0.05 mass% or more. In addition, a total content of the first dispersing agent for a conductive material based on a total amount of the solid content of the positive electrode composition may be, for example, 1.0 mass% or less, and in order to minimize a decrease in conductivity due to the insulating dispersing agent, the total content is preferably 0.8 mass% or less and more preferably 0.6 mass% or less, and may be 0.4 mass% or less, 0.2 mass% or less or 0.1 mass% or less.

That is, a total content of the first dispersing agent for a conductive material based on a total amount of the solid content of the positive electrode composition may be, for example, 0.01 to 1.0 mass%, 0.01 to 0.8 mass%, 0.01 to 0.6 mass%, 0.01 to 0.4 mass%, 0.01 to 0.2 mass%, 0.01 to 0.1 mass%, 0.02 to 1.0 mass%, 0.02 to 0.8 mass%, 0.02 to 0.6 mass%, 0.02 to 0.4 mass%, 0.02 to 0.2 mass%, 0.02 to 0.1 mass%, 0.025 to 1.0 mass%, 0.025 to 0.8 mass%, 0.025 to 0.6 mass%, 0.025 to 0.4 mass%, 0.025 to 0.2 mass%, 0.025 to 0.1 mass%, 0.03 to 1.0 mass%, 0.03 to 0.8 mass%, 0.03 to 0.6 mass%, 0.03 to 0.4 mass%, 0.03 to 0.2 mass%, 0.03 to 0.1 mass%, 0.035 to 1.0 mass%, 0.035 to 0.8 mass%, 0.035 to 0.6 mass%, 0.035 to 0.4 mass%, 0.035 to 0.2 mass%, 0.035 to 0.1 mass%, 0.05 to 1.0 mass%, 0.05 to 0.8 mass%, 0.05 to 0.6 mass%, 0.05 to 0.4 mass%, 0.05 to 0.2 mass% or 0.05 to 0.1 mass%.

A total content of the second dispersing agent for a conductive material based on a total amount of the solid content of the positive electrode composition may be, for example, 0.01 mass% or more, and in order to increase the dispersibility of carbon nanotubes, the total content is preferably 0.02 mass% or more and more preferably 0.025 mass% or more, and may be 0.03 mass% or more, 0.035 mass% or more or 0.05 mass% or more. In addition, a total content of the second dispersing agent for a conductive material based on a total amount of the solid content of the positive electrode composition may be, for example, 1.0 mass% or less, and in order to minimize a decrease in conductivity due to the insulating dispersing agent, the total content is preferably 0.8 mass% or less and more preferably 0.6 mass% or less, and may be 0.4 mass% or less, 0.2 mass% or less or 0.1 mass% or less.

That is, a total content of the second dispersing agent for a conductive material based on a total amount of the solid content of the positive electrode composition may be, for example, 0.01 to 1.0 mass%, 0.01 to 0.8 mass%, 0.01 to 0.6 mass%, 0.01 to 0.4 mass%, 0.01 to 0.2 mass%, 0.01 to 0.1 mass%, 0.02 to 1.0 mass%, 0.02 to 0.8 mass%, 0.02 to 0.6 mass%, 0.02 to 0.4 mass%, 0.02 to 0.2 mass%, 0.02 to 0.1 mass%, 0.025 to 1.0 mass%, 0.025 to 0.8 mass%, 0.025 to 0.6 mass%, 0.025 to 0.4 mass%, 0.025 to 0.2 mass%, 0.025 to 0.1 mass%, 0.03 to 1.0 mass%, 0.03 to 0.8 mass%, 0.03 to 0.6 mass%, 0.03 to 0.4 mass%, 0.03 to 0.2 mass%, 0.03 to 0.1 mass%, 0.035 to 1.0 mass%, 0.035 to 0.8 mass%, 0.035 to 0.6 mass%, 0.035 to 0.4 mass%, 0.035 to 0.2 mass%, 0.035 to 0.1 mass%, 0.05 to 1.0 mass%, 0.05 to 0.8 mass%, 0.05 to 0.6 mass%, 0.05 to 0.4 mass%, 0.05 to 0.2 mass% or 0.05 to 0.1 mass%.

The content of the liquid medium is not particularly limited, and may be appropriately changed so that the solid content concentration of the positive electrode composition is within a desired range.

The solid content concentration of the positive electrode composition is, for example, 63 mass% or more, and in order to make the time for drying the liquid medium when the positive electrode is produced shorten and restrict migration of the conductive material when the liquid medium is dried, the solid content concentration may be 65 mass% or more, 66 mass% or more or 67 mass% or more.

In addition, the solid content concentration of the positive electrode composition is, for example 82 mass% or less, and in order to make the coating film when the positive electrode is produced smooth, and reduce the variation in the internal resistance of the battery, the solid content concentration may be 80 mass% or less, 78 mass% or less, 76 mass% or less, 74 mass% or less, 72 mass% or less or 70 mass% or less.

That is, the solid content concentration of the positive electrode composition may be, for example, 63 to 82 mass%, 63 to 80 mass%, 63 to 78 mass%, 63 to 76 mass%, 63 to 74 mass%, 63 to 72 mass%, 63 to 70 mass%, 65 to 82 mass%, 65 to 80 mass%, 65 to 78 mass%, 65 to 76 mass%, 65 to 74 mass%, 65 to 72 mass%, 65 to 70 mass%, 66 to 82 mass%, 66 to 80 mass%, 66 to 78 mass%, 66 to 76 mass%, 66 to 74 mass%, 66 to 72 mass%, 66 to 70 mass%, 67 to 82 mass%, 67 to 80 mass%, 67 to 78 mass%, 67 to 76 mass%, 67 to 74 mass%, 67 to 72 mass% or 67 to 70 mass%.

### (Method of producing positive electrode composition)

A method of producing a positive electrode composition of the present embodiment is not particularly limited, and in order to obtain a better dispersed state of the conductive material and further improve battery characteristics, the following production method is preferable.

The method of producing a positive electrode composition of the present embodiment is a method of obtaining a positive electrode composition by mixing a first agent containing a binding material and a first liquid medium, a second agent containing carbon black, a first dispersing agent for a conductive material and a second liquid medium, a third agent containing carbon nanotubes, a second dispersing agent for a conductive material and a third liquid medium, and an active material in a predetermined order.

According to the method of producing a positive electrode composition of the present embodiment, compared to when carbon black, carbon nanotubes, a dispersing agent for a conductive material, a binding material and an active material are mixed at the same time, the carbon black and carbon nanotubes, which are conductive materials, are in a suitable dispersed state, and a positive electrode composition that can realize excellent discharge rate characteristics and cycle characteristics is easily obtained.

The method of producing a positive electrode composition of the present embodiment may be, for example, the following first aspect or the following second aspect.

In the first aspect, the method of producing a positive electrode composition includes a first process in which a first agent containing a binding material and a first liquid medium, a second agent containing carbon black, a first dispersing agent for a conductive material and a second liquid medium and a third agent containing carbon nanotubes, a second dispersing agent for a conductive material and a third liquid medium are mixed to obtain a mixed solution, and a second process in which the mixed solution and an active material are mixed to obtain a positive electrode composition.

According to the first aspect, compared to when carbon black, carbon nanotubes, a dispersing agent for a conductive material, a binding material and an active material are mixed at the same time, the conductive material (carbon black and carbon nanotubes) tends to be in a suitable dispersed state, and a positive electrode composition that can realize excellent discharge rate characteristics and cycle characteristic is easily obtained. One of the reasons why the above effects are achieved by the production method according to the first aspect is thought to be that, in the first process, due to interaction between the binding material, the carbon black, and the dispersing agent for a conductive material, a dispersed state in which aggregation is less likely to occur, and entanglement with carbon nanotubes is less likely to occur is realized, and the non-uniformity caused by aggregation of carbon black or entanglement of carbon black and carbon nanotubes is reduced.

The first process of the first aspect is a process of obtaining a mixed solution by mixing a first agent containing a binding material and a first liquid medium, a second agent containing carbon black, a first dispersing agent for a conductive material and a second liquid medium, and a third agent containing carbon nanotubes, a second dispersing agent for a conductive material and a third liquid medium.

In the first process of the first aspect, the method of mixing the first agent, the second agent and the third agent is not particularly limited, and may be performed by a known method (for example, stirring and mixing using a ball mill, a sand mill, a twin screw kneader, a rotation/revolution stirrer, a planetary mixer, or a disper mixer). The first process of the first aspect may be, for example, a process of obtaining a mixed solution by putting a first agent, a second agent and a third agent into a mixing container and then performing stirring.

The second process of the first aspect is a process of obtaining a positive electrode composition by mixing the mixed solution obtained in the first process and an active material.

In the second process of the first aspect, the method of mixing the mixed solution and the active material is not particularly limited, and may be performed by a known method (for example, stirring and mixing using a ball mill, a sand mill, a twin screw kneader, a rotation/revolution stirrer, a planetary mixer, or a disper mixer). The second process of the first aspect may be, for example, a process of obtaining a positive electrode composition by putting an active material into a mixing container containing a mixed solution and then performing stirring.

In the second aspect, the method of producing a positive electrode composition includes a first process in which a first agent containing a binding material and a first liquid medium and a second agent containing carbon black, a first dispersing agent for a conductive material and a second liquid medium are mixed to obtain a first mixed solution, a second process in which the first mixed solution and a third agent containing carbon nanotubes, a second dispersing agent for a conductive material and a third liquid medium are mixed to obtain a second mixed solution, and a third process in which the second mixed solution and an active material are mixed to obtain a positive electrode composition.

According to the second aspect, compared to when carbon black, carbon nanotubes, a dispersing agent for a conductive material, a binding material and an active material are mixed at the same time, the conductive material (carbon black and carbon nanotubes) tends to be in a suitable dispersed state, and a positive electrode composition that can realize excellent discharge rate characteristics and cycle characteristic is easily obtained. One of the reasons why the above effects are achieved by the production method according to the second aspect is thought to be that, in the first process, due to interaction between the binding material, the carbon black, and the dispersing agent for a conductive material, a dispersed state in which aggregation is less likely to occur, and entanglement with carbon nanotubes is less likely to occur is realized, and the non-uniformity of the electrode structure caused by aggregation of carbon black or entanglement of carbon black and carbon nanotubes is reduced

The first process of the second aspect is a process of obtaining a first mixed solution by mixing a first agent containing a binding material and a first liquid medium and a second agent containing carbon black, a first dispersing agent for a conductive material and a second liquid medium.

In the first process of the second aspect, the method of mixing the first agent and the second agent is not particularly limited, and may be performed by a known method (for example, stirring and mixing using a ball mill, a sand mill, a twin screw kneader, a rotation/revolution stirrer, a planetary mixer, or a disper mixer). The first process of the second aspect may be, for example, a process of obtaining a first mixed solution by putting a first agent and a second agent into a mixing container and then performing stirring.

The second process of the second aspect is a process of obtaining a second mixed solution by mixing the first mixed solution obtained in the first process, and a third agent containing carbon nanotubes, a second dispersing agent for a conductive material and a third liquid medium.

In the second process of the second aspect, the method of mixing the first mixed solution and the third agent is not particularly limited, and may be performed by a known method (for example, stirring and mixing using a ball mill, a sand mill, a twin screw kneader, a rotation/revolution stirrer, a planetary mixer, or a disper mixer). The second process of the second aspect may be, for example, a process of obtaining a second mixed solution by putting a third agent into a mixing container containing a first mixed solution and then performing stirring.

The third process of the second aspect is a process of obtaining a positive electrode composition obtained by mixing the second mixed solution obtained in the second process and an active material.

In the third process of the second aspect, the method of mixing the second mixed solution and the active material is not particularly limited, and may be performed by a known method (for example, stirring and mixing using a ball mill, a sand mill, a twin screw kneader, a rotation/revolution stirrer, a planetary mixer, or a disper mixer). The third process of the second aspect may be, for example, a process of obtaining a positive electrode composition by putting an active material into a mixing container containing a second mixed solution and then performing stirring.

Hereinafter, the first agent, the second agent and the third agent used in the method of producing a positive electrode composition of the present embodiment will be described in detail.

The first agent contains a binding material and a first liquid medium.

The first liquid medium is not particularly limited as long as it can dissolve the binding material and is compatible with the second liquid medium and the third liquid medium. Examples of first liquid media include water, N-methyl-2-pyrrolidone, cyclohexane, methyl ethyl ketone, and methyl isobutyl ketone, and among these, N-methyl-2-pyrrolidone is preferable in consideration of solubility.

The content of the first liquid medium in the first agent is not particularly limited, and the content is not particularly limited as long as it is within a range in which the binding material can be dissolved, and the content may be appropriately changed so that the solid content concentration of the positive electrode composition is within a desired range.

The solid content concentration of the first agent is not particularly limited, and may be, for example, 1.0 mass% or more, 2.0 mass% or more, 3.0 mass% or more or 4.0 mass% or more. In addition, the solid content concentration of the first agent may be, for example, 11.0 mass% or less, 10.0 mass% or less, or 9.0 mass% or less.

That is, the solid content concentration of the first agent may be, for example, 1.0 to 11.0 mass%, 1.0 to 10.0 mass%, 1.0 to 9.0 mass%, 2.0 to 11.0 mass%, 2.0 to 10.0 mass%, 2.0 to 9.0 mass%, 3.0 to 11.0 mass%, 3.0 to 10.0 mass%, 3.0 to 9.0 mass%, 4.0 to 11.0 mass%, 4.0 to 10.0 mass% or 4.0 to 9.0 mass%.

The first agent may further contain a component other than the binding material and the first liquid medium. The first agent may further contain, for example, a polyvinylpyrrolidone, polyvinylimidazole, polyethylene glycol, polyvinyl alcohol, polyvinyl butyral, carboxymethyl cellulose, acetylcellulose or carboxylic acid-modified (meth)acrylic acid ester copolymer.

The second agent contains carbon black, a first dispersing agent for a conductive material and a second liquid medium.

The content of carbon black in the second agent is not particularly limited, and may be appropriately changed so that the content of the carbon black in the positive electrode composition is within a desired range.

The first dispersing agent for a conductive material may be any component that has a function of assisting with dispersion of carbon black in the second liquid medium, and can also be called a dispersing agent for carbon black.

The content of the first dispersing agent for a conductive material in the second agent is not particularly limited, and may be appropriately changed so that the content of the dispersing agent for a conductive material in the positive electrode composition is within a desired range.

The content of the first dispersing agent for a conductive material in the second agent with respect to 100 parts by mass of carbon black may be, for example, 1 part by mass or more, and in order to increase the dispersibility of carbon black, the content is preferably 2 parts by mass or more and more preferably3 parts by mass or more, and may be 4 parts by mass or more or 5 parts by mass or more. In addition, the content of the first dispersing agent for a conductive material in the second agent with respect to 100 parts by mass of carbon black may be, for example, 50 parts by mass or less, and in order to minimize a decrease in conductivity due to the insulating dispersing agent, the content is preferably 45 parts by mass or less and more preferably 40 parts by mass or less, and may be 35 parts by mass or less or 30 parts by mass or less.

That is, the content of the first dispersing agent for a conductive material in the second agent with respect to 100 parts by mass of carbon black may be, for example, 1 to 50 parts by mass, 1 to 45 parts by mass, 1 to 40 parts by mass, 1 to 35 parts by mass, 1 to 30 parts by mass, 2 to 50 parts by mass, 2 to 45 parts by mass, 2 to 40 parts by mass, 2 to 35 parts by mass, 2 to 30 parts by mass, 3 to 50 parts by mass, 3 to 45 parts by mass, 3 to 40 parts by mass, 3 to 35 parts by mass, 3 to 30 parts by mass, 4 to 50 parts by mass, 4 to 45 parts by mass, 4 to 40 parts by mass, 4 to 35 parts by mass, 4 to 30 parts by mass, 5 to 50 parts by mass, 5 to 45 parts by mass, 5 to 40 parts by mass, 5 to 35 parts by mass or 5 to 30 parts by mass.

The second liquid medium is not particularly limited as long as it can disperse carbon black and is compatible with the first liquid medium and the third liquid medium. Examples of second liquid media include water, N-methyl-2-pyrrolidone, cyclohexane, methyl ethyl ketone, and methyl isobutyl ketone, and among these, N-methyl-2-pyrrolidone is preferable in consideration of easy dispersibility of carbon black. The second liquid medium may be the same as or different from the first liquid medium and the third liquid medium, and is preferably the same as the first liquid medium and the third liquid medium.

The content of the second liquid medium in the second agent is not particularly limited, and the content is not particularly limited as long as it is within a range in which carbon black can be dispersed, and the content may be appropriately changed so that the solid content concentration of the positive electrode composition is within a desired range.

The solid content concentration of the second agent is not particularly limited, and may be, for example, 1.5 mass% or more, 2.5 mass% or more, 3.5 mass% or more or 5.0 mass% or more. In addition, the solid content concentration of the second agent may be, for example, 25.0 mass% or less, 22.0 mass% or less, 20.0 mass% or less or 18.0 mass% or less.

That is, the solid content concentration of the second agent may be, for example, 1.5 to 25.0 mass%, 1.5 to 22.0 mass%, 1.5 to 20.0 mass%, 1.5 to 18.0 mass%, 2.5 to 25.0 mass%, 2.5 to 22.0 mass%, 2.5 to 20.0 mass%, 2.5 to 18.0 mass%, 3.5 to 25.0 mass%, 3.5 to 22.0 mass%, 3.5 to 20.0 mass%, 3.5 to 18.0 mass%, 5.0 to 25.0 mass%, 5.0 to 22.0 mass%, 5.0 to 20.0 mass% or 5.0 to 18.0 mass%.

The third agent contains carbon nanotubes, a second dispersing agent for a conductive material and a third liquid medium.

The content of carbon nanotubes in the third agent is not particularly limited, and may be appropriately changed so that the content of carbon nanotubes in the positive electrode composition is within a desired range.

The second dispersing agent for a conductive material may be any component that has a function of assisting with dispersion of carbon nanotubes in the third liquid medium, and can also be called a dispersing agent for carbon nanotubes.

The content of the second dispersing agent for a conductive material in the third agent is not particularly limited, and may be appropriately changed so that the content of the dispersing agent for a conductive material in the positive electrode composition is within a desired range.

The content of the second dispersing agent for a conductive material in the third agent with respect to 100 parts by mass of carbon nanotubes may be, for example, 1 part by mass or more, and in order to increase the dispersibility of carbon nanotubes, the content is preferably 2 parts by mass or more and more preferably 3 parts by mass or more, and may be 4 parts by mass or more or 5 parts by mass or more. In addition, the content of the second dispersing agent for a conductive material in the third agent with respect to 100 parts by mass of carbon nanotubes may be, for example, 50 parts by mass or less, and in order to minimize a decrease in conductivity due to the insulating dispersing agent, the content is preferably 45 parts by mass or less and more preferably 40 parts by mass or less, and may be 35 parts by mass or less or 30 parts by mass or less.

That is, the content of the second dispersing agent for a conductive material in the third agent with respect to 100 parts by mass of carbon nanotubes may be, for example, 1 to 50 parts by mass, 1 to 45 parts by mass, 1 to 40 parts by mass, 1 to 35 parts by mass, 1 to 30 parts by mass, 2 to 50 parts by mass, 2 to 45 parts by mass, 2 to 40 parts by mass, 2 to 35 parts by mass, 2 to 30 parts by mass, 3 to 50 parts by mass, 3 to 45 parts by mass, 3 to 40 parts by mass, 3 to 35 parts by mass, 3 to 30 parts by mass, 4 to 50 parts by mass, 4 to 45 parts by mass, 4 to 40 parts by mass, 4 to 35 parts by mass, 4 to 30 parts by mass, 5 to 50 parts by mass, 5 to 45 parts by mass, 5 to 40 parts by mass, 5 to 35 parts by mass or 5 to 30 parts by mass.

The third liquid medium is not particularly limited as long as it can disperse carbon nanotubes and is compatible with the first liquid medium and the second liquid medium. Examples of third liquid media include water, N-methyl-2-pyrrolidone, cyclohexane, methyl ethyl ketone, and methyl isobutyl ketone, and among these, N-methyl-2-pyrrolidone is preferable in consideration of easy dispersibility of carbon nanotubes. The third liquid medium may be the same as or different from the first liquid medium and the second liquid medium, and is preferably the same as the first liquid medium and the second liquid medium.

The content of the third liquid medium in the third agent is not particularly limited, and the content is not particularly limited as long as it is within a range in which carbon nanotubes can be dispersed, and the content may be appropriately changed so that the solid content concentration of the positive electrode composition is within a desired range.

The solid content concentration of the third agent is not particularly limited, and may be, for example, 0.2 mass% or more, 0.8 mass% or more, 1.5 mass% or more or 2.5 mass% or more. In addition, solid content concentration of the third agent may be, for example, 15.0 mass% or less, 12.5 mass% or less, 10.0 mass% or less or 7.5 mass% or less.

That is, the solid content concentration of the third agent may be, for example, 0.2 to 15.0 mass%, 0.2 to 12.5 mass%, 0.2 to 10.0 mass%, 0.2 to 7.5 mass%, 0.8 to 15.0 mass%, 0.8 to 12.5 mass%, 0.8 to 10.0 mass%, 0.8 to 7.5 mass%, 1.5 to 15.0 mass%, 1.5 to 12.5 mass%, 1.5 to 10.0 mass%, 1.5 to 7.5 mass%, 2.5 to 15.0 mass%, 2.5 to 12.5 mass%, 2.5 to 10.0 mass% or 2.5 to 7.5 mass%.

### (Method of producing positive electrode)

A method of producing a positive electrode of the present embodiment includes a forming process in which the positive electrode composition is applied onto a current collector to form a mixture layer containing the conductive material, the binding material, the active material and the dispersing agent for a conductive material on the current collector.

In the forming process, the positive electrode composition is applied onto a current collector to form a mixture layer on the current collector. The mixture layer is a layer containing a solid content (at least a conductive material, a binding material, an active material and a dispersing agent for a conductive material) in the positive electrode composition, and may be a layer obtained by removing at least a part of the liquid medium from the positive electrode composition.

The current collector is not particularly limited, and any known current collector can be used without particular limitation. As the current collector, for example, metal foils (metals such as gold, silver, copper, platinum, aluminum, iron, nickel, chromium, manganese, lead, tungsten and titanium and alloys containing any of these as the main component) are used. Among these, it is preferable to use aluminum for the positive electrode and copper for the negative electrode. The current collector is generally provided in the form of foil, but is not limited thereto, and perforated foil-like and mesh-like current collectors can also be used.

The method of applying the positive electrode composition onto the current collector is not particularly limited, and the method may be, for example, a die coating method, a dip coating method, a roll coating method, a doctor coating method, a knife coating method, a spray coating method, a gravure coating method, a screen printing method, and an electrostatic coating method.

The amount of the positive electrode composition applied is not particularly limited, and may be appropriately adjusted so that the thickness of the mixture layer is within a desired range.

The mixture layer may be formed by removing at least a part of the liquid medium from the coating film of the positive electrode composition formed on the current collector. The method of removing the liquid medium is not particularly limited, and for example, as a method of vaporizing and removing at least a part of the liquid medium by heating and/or decompression, standing drying, a fan dryer, a warm air dryer, an infrared heater, a far infrared heater and the like may be used.

The method of producing a positive electrode of the present embodiment may further include a pressurization process in which the mixture layer formed in the forming process and the current collector are pressurized in the lamination direction. According to the pressurization process, the mixture layer and the current collector could be brought into close contact with each other.

The pressurization method in the pressurization process is not particularly limited, and may be, for example, a roll pressing, mold pressing, or calendar pressing method.

The thickness of the mixture layer in the positive electrode is not particularly limited, and may be, for example, 50 µm or more, and in order to increase the capacity of the battery, the thickness is preferably 55 µm or more, and more preferably 60 µm or more, and may be 65 µm or more or 70 µm or more. In addition, the thickness of the mixture layer in the positive electrode may be, for example, 150 µm or less, and in order to further improve discharge rate characteristics, the thickness is preferably 140 µm or less, and more preferably 130 µm or less, and may be 120 µm or less or 110 µm or less.

That is, the thickness of the mixture layer in the positive electrode may be, for example, 50 to 150 µm, 50 to 140 µm, 50 to 130 µm, 50 to 120 µm, 50 to 110 µm, 55 to 150 µm, 55 to 140 µm, 55 to 130 µm, 55 to 120 µm, 55 to 110 µm, 60 to 150 µm, 60 to 140 µm, 60 to 130 µm, 60 to 120 µm, 60 to 110 µm, 65 to 150 µm, 65 to 140 µm, 65 to 130 µm, 65 to 120 µm, 65 to 110 µm, 70 to 150 µm, 70 to 140 µm, 70 to 130 µm, 70 to 120 µm or 70 to 110 µm.

The positive electrode produced by the production method of the present embodiment can be suitably used as a positive electrode of a battery, particularly a secondary battery (lithium ion secondary battery).

### (Positive electrode)

The positive electrode of the present embodiment is a positive electrode having a mixture layer containing a conductive material, an active material, a binding material and a dispersing agent for a conductive material. The positive electrode of the present embodiment is, for example, a positive electrode produced by the production method.

The positive electrode of the present embodiment can be suitably used as a positive electrode of a battery, particularly a secondary battery (lithium ion secondary battery).

The battery (preferably a secondary battery and more preferably a lithium ion secondary battery) in the present embodiment includes a positive electrode produced by the production method. In the battery of the present embodiment, the configuration other than the positive electrode may be the same as that of a known battery.

The application of the battery in the present embodiment is not particularly limited, and the battery can be used in a wide range of fields, for example, mobile AV devices such as digital cameras, video cameras, portable audio players, and mobile LCD TVs, mobile information terminals such as laptop computers, smartphones, and mobile PCs, and also portable game devices, electric tools, electric bicycles, hybrid vehicles, electric vehicles, and power storage systems.

While preferable embodiments of the present invention have been described above, the present invention is not limited to the above embodiments.

### [Examples]

Hereinafter, the present invention will be described in more detail with reference to examples, but the present invention is not limited to these examples.

### <Example 1>

### (Carbon black)

Carbon black was produced by supplying acetylene at 12 Nm³/h, toluene at 32 kg/h, and oxygen at 22 Nm³/h, which were raw materials, from a nozzle installed in the upstream part of the carbon black reaction furnace (with a furnace length of 6 m and a furnace diameter of 0.65 m), and collected through a bag filter installed in the downstream part of the reaction furnace. Then, the sample was passed through a dry cyclone device and an iron removal magnet and collected in a tank. Here, acetylene, toluene, and oxygen were heated to 115°C and then supplied to the reaction furnace, and carbon black A was obtained. The obtained carbon black A had a BET specific surface area of 240 m²/g, an average primary particle size of 20 nm, and a crystallite size (Lc) of 16 Å.

### (Carbon black dispersion solution)

The carbon black A, NMP as a liquid medium, and a polyvinyl alcohol (Poval DR-1137, commercially available from Denka Co., Ltd., SP value:35 J/cm³) as a dispersing agent were prepared. 1.0 mass% of the polyvinyl alcohol and 10.0 mass% of the carbon black A were added to 89.0 mass% of NMP, and the mixture was stirred using a planetary mixer (Hivis Disper Mix Model 3D-5, commercially available from Primix Corporation) for 120 minutes to prepare a slurry containing the carbon black A. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

### (Carbon nanotube dispersion solution)

Carbon nanotubes ("Flotube6000," commercially available from CNano, an average diameter of 6 nm, and a BET specific surface area of 300 m²/g), NMP as a liquid medium, and polyvinylpyrrolidone (PITZCOL K90, commercially available from DKS Co., Ltd., SP value:25 J/cm³) as a dispersing agent were prepared. 1.0 mass% of polyvinylpyrrolidone and 4.0 mass% of carbon nanotubes were added to 95.0 mass% of NMP, and the mixture was stirred using a planetary mixer (Hivis Disper Mix Model 3D-5, commercially available from Primix Corporation) for 120 minutes to prepare a slurry containing carbon nanotubes. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon nanotube dispersion solution.

### (Production of positive electrode composition)

As an active material, a nickel manganese cobaltate lithium having an average particle size D₅₀ of 12 µm ("ME6A," commercially available from Beijing Easpring Material Technology Co., Ltd.) was prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

### (Production of positive electrode)

The positive electrode composition was formed into a film using an applicator on one surface of an aluminum foil having a thickness of 15 µm (commercially available from UACJ) to produce a laminate, which was left in a dryer, and pre-dried at 105°C for 1 hour, and NMP was completely removed. Next, the dried laminate was pressed using a roll press machine at a linear pressure of 200 kg/cm, and the thickness of the entire laminate was adjusted to 80 µm. Next, vacuum-drying was performed at 170°C for 3 hours, and the residual water was completely removed to obtain a positive electrode including a current collector and a mixture layer.

### (Production of negative electrode)

Pure water (commercially available from Kanto Chemical Co., Inc.) as a solvent, artificial graphite ("MAG-D," commercially available from Hitachi Chemical Company) as a negative electrode active material, styrene butadiene rubber ("BM-400B," commercially available from Zeon Corporation; hereinafter referred to as SBR) as a binding material, and carboxymethyl cellulose ("D2200," commercially available from Daicel Corporation; hereinafter referred to as CMC) as a dispersing agent were prepared. Next, 1 mass% of CMC (solid content) and 97 mass% of artificial graphite (solid content) were weighed out and mixed, pure water was added to the mixture, and the mixture was mixed using a rotation/revolution mixer (Thinky Mixer ARV-310, commercially available from Thinky Corporation) until it became uniform to obtain a mixture. Next, 2 mass% of SBR (solid content) was weighed out and added to the obtained mixture, and the mixture was mixed using a rotation/revolution mixer (Thinky Mixer ARV-310, commercially available from Thinky Corporation) until it became uniform to obtain a negative electrode composition. Next, the negative electrode composition was formed into a film using an applicator on a copper foil having a thickness of 10 µm (commercially available from UACJ) to produce a laminate, which was left in a dryer, and pre-dried at 60°C for 1 hour. Next, the laminate was pressed using a roll press machine at a linear pressure of 50 kg/cm, and the thickness of the entire laminate was adjusted to 60 µm. Next, vacuum-drying was performed at 120°C for 3 hours, and the residual water was completely removed to obtain a negative electrode including a current collector and a mixture layer.

### (Production of battery)

In a dry room in which the dew point was controlled to -50°C or lower, the produced positive electrode was processed into 40×40 mm, the produced negative electrode was processed into 44×44 mm, and an aluminum tab was then welded to the positive electrode, and a nickel tab was welded to the negative electrode. The mixture-coated surfaces of the positive electrode and the negative electrode were arranged to face each other at the center, and a polyolefin microporous film processed into 45×45 mm was disposed between the positive electrode and the negative electrode. Next, a sheet-like exterior cut and processed into 70×140 mm square was folded in half at the center of the long side. Next, the exterior was disposed so that the aluminum tab for the positive electrode and the nickel tab for the negative electrode were exposed to the outside of the exterior, and a laminate of the positive electrode/polyolefin microporous film/negative electrode was interposed between the exterior folded in two. Next, using a heat sealer, two sides including a side to which the aluminum tab for the positive electrode and the nickel tab for the negative electrode of the exterior were exposed were heat-fused, 2 g of an electrolytic solution (commercially available from Kishida Chemical Co., Ltd., a solution containing ethylene carbonate/diethyl carbonate=1/2 (volume ratio) and a 1 M LiPF₆ solution) was then injected from one side that was not heat-fused, the electrolytic solution was sufficiently impregnated into the positive electrode, the negative electrode and the polyolefin microporous film and the remaining one side of the exterior was then heat-fused while reducing the pressure inside using a vacuum heat sealer to obtain a lithium ion secondary battery.

### (Evaluation of battery)

### [Internal resistance]

The produced battery was charged with a constant current and constant voltage limited to 4.3 V and 0.2C at 25°C, and then discharged to 3.0 V at a constant current of 0.2C. Next, after 5 cycles of charging/discharging under the same conditions, charging was performed to a charging depth of 50%. Then, the impedance was measured in a frequency range of 10 MHz to 0.001 Hz and at a vibration voltage of 5 mV, and the internal resistance was measured. The measurement results of the internal resistance are shown in Table 1.

### [Discharge rate characteristic (rate capacity retention rate)]

The produced battery was charged with a constant current and constant voltage limited to 4.3 V and 0.2C at 25°C, and then discharged to 3.0 V at a constant current of 0.2C. Next, recovery charging was performed again with a constant current and constant voltage limited to 4.3 V and 0.2C, discharging was then performed to 3.0 V at a constant current of 0.2C, and the discharging capacity in this case was measured. Next, regarding recovery charging conditions, charging was performed with a constant current and constant voltage limited to 4.3 V and 0.2C, and on the other hand, while the discharge current was changed stepwise from 0.5C, 1C, 2C, and 3C, recovery charging and discharging were repeated, and a discharging capacity for each discharge current was measured. As an index of the discharge rate characteristic of the battery, the capacity retention rate during 3C discharging relative to during 0.2C discharging was calculated as a rate capacity retention rate. The calculation results of the rate capacity retention rate are shown in Table 1.

### [Cycle characteristic (cycle capacity retention rate)]

The produced battery was charged with a constant current and constant voltage limited to 4.3 V and 1C at 25°C, and then discharged to 3.0 V at a constant current of 1C. The charging and discharging was repeated over 500 cycles, and the discharging capacity was measured in each cycle. As an index of the cycle characteristic of the battery, the capacity retention rate after 500 cycles relative to the capacity retention rate after 1 cycle was calculated as a cycle capacity retention rate. The calculation results of the cycle capacity retention rate are shown in Table 1.

### <Example 2>

### (Carbon nanotube dispersion solution)

Carbon nanotubes ("Flotube6000," commercially available from CNano, an average diameter of 6 nm, and a BET specific surface area of 300 m²/g), NMP as a liquid medium, and polyvinyl butyral (BL-1, commercially available from Sekisui Chemical Co., Ltd., SP value:24 J/cm³) as a dispersing agent were prepared. 1.0 mass% of polyvinyl butyral and 4.0 mass% of carbon nanotubes were added to 95.0 mass% of NMP, and the mixture was stirred using a planetary mixer (Hivis Disper Mix Model 3D-5, commercially available from Primix Corporation) for 120 minutes to prepare a slurry containing carbon nanotubes. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon nanotube dispersion solution.

### (Production of positive electrode and battery)

In addition to the carbon nanotube dispersion solution, the same carbon black dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 1.

### <Example 3>

### (Carbon black dispersion solution)

The carbon black A, NMP as a liquid medium, and a carboxymethylcellulose sodium salt (D2200, commercially available from Daicel Corporation, SP value:29 J/cm³) as a dispersing agent were prepared. 1.0 mass% of the carboxymethylcellulose sodium salt and 10.0 mass% of the carbon black A were added to 89.0 mass% of NMP, and the mixture was stirred using a planetary mixer (Hivis Disper Mix Model 3D-5, commercially available from Primix Corporation) for 120 minutes to prepare a slurry containing the carbon black A. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

### (Production of positive electrode and battery)

In addition to the carbon black dispersion solution, the same carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 1.

### <Example 4>

### (Carbon black dispersion solution)

The carbon black A, NMP as a liquid medium, and polyvinylpyrrolidone (PITZCOL K90, commercially available from DKS Co., Ltd., SP value:25 J/cm³) as a dispersing agent were prepared. 1.0 mass% of polyvinylpyrrolidone and 10.0 mass% of the carbon black A were added to 89.0 mass% of NMP, and the mixture was stirred using a planetary mixer (Hivis Disper Mix Model 3D-5, commercially available from Primix Corporation) for 120 minutes to prepare a slurry containing the carbon black A. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

### (Carbon nanotube dispersion solution)

Carbon nanotubes ("Flotube6000," commercially available from CNano, an average diameter of 6 nm, and a BET specific surface area of 300 m²/g), NMP as a liquid medium, and polyvinyl butyral (BL-1, commercially available from Sekisui Chemical Co., Ltd., SP value:24 J/cm³) as a dispersing agent were prepared. 1.0 mass% of polyvinyl butyral and 4.0 mass% of carbon nanotubes were added to 95.0 mass% of NMP, and the mixture was stirred using a planetary mixer (Hivis Disper Mix Model 3D-5, commercially available from Primix Corporation) for 120 minutes to prepare a slurry containing carbon nanotubes. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon nanotube dispersion solution.

### (Production of positive electrode and battery)

In addition to the carbon black dispersion solution and the carbon nanotube dispersion solution, the same binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 1.

### <Example 5>

### (Carbon nanotube dispersion solution)

Carbon nanotubes ("Flotube6000," commercially available from CNano, an average diameter of 6 nm, and a BET specific surface area of 300 m²/g), NMP as a liquid medium, and a carboxymethylcellulose sodium salt (D2200, commercially available from Daicel Corporation, SP value:29 J/cm³) as a dispersing agent were prepared. 1.0 mass% of the carboxymethylcellulose sodium salt and 4.0 mass% of carbon nanotubes were added to 95.0 mass% of NMP, and the mixture was stirred using a planetary mixer (Hivis Disper Mix Model 3D-5, commercially available from Primix Corporation) for 120 minutes to prepare a slurry containing carbon nanotubes. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon nanotube dispersion solution.

### (Production of positive electrode and battery)

In addition to the carbon nanotube dispersion solution, the same carbon black dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 2.

### <Example 6>

### (Production of positive electrode and battery)

The same carbon black dispersion solution, carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.4 parts by mass, the amount of carbon nanotubes was 0.6 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 2.

### <Example 7>

### (Carbon black)

Carbon black was produced by supplying acetylene at 12 Nm³/h, toluene at 32 kg/h, and oxygen at 19 Nm³/h, which were raw materials, from a nozzle installed in the upstream part of the carbon black reaction furnace (with a furnace length of 6 m and a furnace diameter of 0.65 m), and collected through a bag filter installed in the downstream part of the reaction furnace. Then, the sample was passed through a dry cyclone device and an iron removal magnet and collected in a tank. Here, acetylene, toluene, and oxygen were heated to 115°C and then supplied to the reaction furnace, and carbon black B was obtained. The obtained carbon black B had a BET specific surface area of 178 m²/g, an average primary particle size of 22 nm, and a crystallite size (Lc) of 17 Å.

### (Carbon black dispersion solution)

The carbon black B, NMP as a liquid medium, and a polyvinyl alcohol (Poval DR-1137, commercially available from Denka Co., Ltd., SP value:35 J/cm3) as a dispersing agent were prepared. 1.0 mass% of the polyvinyl alcohol and 10.0 mass% of the carbon black B were added to 89.0 mass% of NMP, and the mixture was stirred using a planetary mixer (Hivis Disper Mix Model 3D-5, commercially available from Primix Corporation) for 120 minutes to prepare a slurry containing the carbon black B. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

### (Production of positive electrode and battery)

In addition to the carbon black dispersion solution, the same carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 78 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 2.

### <Example 8>

### (Carbon black)

Carbon black was produced by supplying acetylene at 12 Nm³/h, toluene at 32 kg/h, and oxygen at 26 Nm³/h, which were raw materials, from a nozzle installed in the upstream part of the carbon black reaction furnace (with a furnace length of 6 m and a furnace diameter of 0.65 m), and collected through a bag filter installed in the downstream part of the reaction furnace. Then, the sample was passed through a dry cyclone device and an iron removal magnet and collected in a tank. Here, acetylene, toluene, and oxygen were heated to 115°C and then supplied to the reaction furnace, and carbon black C was obtained. The obtained carbon black C had a BET specific surface area of 370 m²/g, an average primary particle size of 18 nm, and a crystallite size (Lc) of 20 Å.

### (Carbon black dispersion solution)

The carbon black C, NMP as a liquid medium, and a polyvinyl alcohol (Poval DR-1137, commercially available from Denka Co., Ltd., SP value:35 J/cm3) as a dispersing agent were prepared. 1.0 mass% of the polyvinyl alcohol and 10.0 mass% of the carbon black C were added to 89.0 mass% of NMP, and the mixture was stirred using a planetary mixer (Hivis Disper Mix Model 3D-5, commercially available from Primix Corporation) for 120 minutes to prepare a slurry containing the carbon black C. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

### (Production of positive electrode and battery)

In addition to the carbon black dispersion solution, the same carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 67 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 2.

### <Example 9>

### (Production of positive electrode and battery)

The same carbon black dispersion solution, carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.2 parts by mass, the amount of carbon nanotubes was 0.8 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 3.

### <Example 10>

### (Production of positive electrode and battery)

The same carbon black dispersion solution, carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.95 parts by mass, the amount of carbon nanotubes was 0.05 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 3.

### <Comparative Example 1>

### (Carbon nanotube dispersion solution)

Carbon nanotubes ("Flotube6000," commercially available from CNano, an average diameter of 6 nm, and a BET specific surface area of 300 m²/g), NMP as a liquid medium, and a polyvinyl alcohol (Poval DR-1137, commercially available from Denka Co., Ltd., SP value:35 J/cm³) were prepared. 1.0 mass% of the polyvinyl alcohol and 4.0 mass% of carbon nanotubes were added to 95.0 mass% of NMP, and the mixture was stirred using a planetary mixer (Hivis Disper Mix Model 3D-5, commercially available from Primix Corporation) for 120 minutes to prepare a slurry containing carbon nanotubes. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon nanotube dispersion solution.

### (Production of positive electrode and battery)

In addition to the carbon nanotube dispersion solution, the same carbon black dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 4.

### <Comparative Example 2>

### (Carbon black dispersion solution)

The carbon black A, NMP as a liquid medium, and polyvinylpyrrolidone (PITZCOL K90, commercially available from DKS Co., Ltd., SP value:25 J/cm³) as a dispersing agent were prepared. 1.0 mass% of polyvinylpyrrolidone and 10.0 mass% of the carbon black A were added to 89.0 mass% of NMP, and the mixture was stirred using a planetary mixer (Hivis Disper Mix Model 3D-5, commercially available from Primix Corporation) for 120 minutes to prepare a slurry containing the carbon black A. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

In addition to the carbon black dispersion solution, the same carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 4.

### <Comparative Example 3>

### (Carbon black dispersion solution)

The carbon black A, NMP as a liquid medium, and polyvinyl butyral (BL-1, commercially available from Sekisui Chemical Co., Ltd., SP value:24 J/cm³) as a dispersing agent were prepared. 1.0 mass% of polyvinyl butyral and 10.0 mass% of the carbon black A were added to 89.0 mass% of NMP, and the mixture was stirred using a planetary mixer (Hivis Disper Mix Model 3D-5, commercially available from Primix Corporation) for 120 minutes to prepare a slurry containing the carbon black A. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

### (Carbon nanotube dispersion solution)

Carbon nanotubes ("Flotube6000," commercially available from CNano, an average diameter of 6 nm, and a BET specific surface area of 300 m²/g), NMP as a liquid medium, and polyvinyl butyral (BL-1, commercially available from Sekisui Chemical Co., Ltd., SP value:24 J/cm³) as a dispersing agent were prepared. 1.0 mass% of polyvinyl butyral and 4.0 mass% of carbon nanotubes were added to 95.0 mass% of NMP, and the mixture was stirred using a planetary mixer (Hivis Disper Mix Model 3D-5, commercially available from Primix Corporation) for 120 minutes to prepare a slurry containing carbon nanotubes. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon nanotube dispersion solution.

### (Production of positive electrode and battery)

In addition to the carbon black dispersion solution and the carbon nanotube dispersion solution, the same binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 4.

### <Comparative Example 4>

### (Carbon black dispersion solution)

The carbon black A, NMP as a liquid medium, and a carboxymethylcellulose sodium salt (D2200, commercially available from Daicel Corporation, SP value:29 J/cm³) as a dispersing agent were prepared. 1.0 mass% of the carboxymethylcellulose sodium salt and 10.0 mass% of the carbon black A were added to 89.0 mass% of NMP, and the mixture was stirred using a planetary mixer (Hivis Disper Mix Model 3D-5, commercially available from Primix Corporation) for 120 minutes to prepare a slurry containing the carbon black A. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

### (Carbon nanotube dispersion solution)

Carbon nanotubes ("Flotube6000," commercially available from CNano, an average diameter of 6 nm, and a BET specific surface area of 300 m²/g), NMP as a liquid medium, and a carboxymethylcellulose sodium salt (D2200, commercially available from Daicel Corporation, SP value:29 J/cm³) as a dispersing agent were prepared. 1.0 mass% of the carboxymethylcellulose sodium salt and 4.0 mass% of carbon nanotubes were added to 95.0 mass% of NMP, and the mixture was stirred using a planetary mixer (Hivis Disper Mix Model 3D-5, commercially available from Primix Corporation) for 120 minutes to prepare a slurry containing carbon nanotubes. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon nanotube dispersion solution.

### (Production of positive electrode and battery)

In addition to the carbon black dispersion solution and the carbon nanotube dispersion solution, the same binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 69 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 4.

### <Comparative Example 5>

### (Carbon black dispersion solution)

Carbon black having a BET specific surface area of 87 m²/g, an average primary particle size of 25 nm, and a crystallite size (Lc) of 23 Å ("LiTX-HP," commercially available from Carbot) as carbon black, NMP as a liquid medium, and a polyvinyl alcohol (Poval DR-1137, commercially available from Denka Co., Ltd., SP value:35 J/cm³) as a dispersing agent were prepared. 1.0 mass% of the polyvinyl alcohol and 10.0 mass% of LiTX-HP were added to 89.0 mass% of NMP, and the mixture was stirred using a planetary mixer (Hivis Disper Mix Model 3D-5, commercially available from Primix Corporation) for 120 minutes to prepare a slurry containing LiTX-HP. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

In addition to the carbon black dispersion solution, the same carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 70 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 5.

### <Comparative Example 6>

### (Carbon black dispersion solution)

Carbon black having a BET specific surface area of 820 m²/g, an average primary particle size of 40 nm, and a crystallite size (Lc) of 16 Å ("ECP," commercially available from Lion Corporation) as carbon black, NMP as a liquid medium, and a polyvinyl alcohol (Poval DR-1137, commercially available from Denka Co., Ltd., SP value:35 J/cm3) as a dispersing agent were prepared. 1.0 mass% of the polyvinyl alcohol and 10.0 mass% of ECP were added to 89.0 mass% of NMP, and the mixture was stirred using a planetary mixer (Hivis Disper Mix Model 3D-5, commercially available from Primix Corporation) for 120 minutes to prepare a slurry containing ECP. The obtained slurry was put into a bead mill (Mugen Flow MGF2-ZA, commercially available from Ashizawa Finetech Ltd.) with zirconia beads (with a diameter of 0.5 mm) loaded therein and dispersed. After the dispersion treatment was performed, the zirconia beads were removed by filtration to obtain a carbon black dispersion solution.

In addition to the carbon black dispersion solution, the same carbon nanotube dispersion solution, binding material and active material as in Example 1 were prepared.

In the first step, an NMP solution of polyvinylidene fluoride ("L#7208," commercially available from Kureha Corporation) as a binding material, a carbon black dispersion solution and a carbon nanotube dispersion solution were weighed out in a plastic container such that the amount of carbon black was 0.7 parts by mass, the amount of carbon nanotubes was 0.3 parts by mass, and the amount of the binding material was 2 parts by mass, and the mixture was mixed using a rotation/revolution mixer (Thinky Mixer ARV-310, commercially available from Thinky Corporation) at a revolution speed of 2,000 rpm for 5 minutes to obtain a mixed solution.

In the second step, 97 parts by mass of the active material and the NMP solution were added to the mixed solution obtained in the first step, the total solid content concentration was adjusted to 66 mass%, and the mixture was mixed using a rotation/revolution mixer (Thinky Mixer ARV-310, commercially available from Thinky Corporation) at a revolution speed of 2,000 rpm for 5 minutes to obtain a positive electrode composition.

Using the obtained positive electrode composition, a positive electrode and a battery were produced and evaluated in the same manner as in Example 1. The results are shown in Table 5.

**[Table 1]**

| | | Example 1 | Example 2 | Example 3 | Example 4 |
|---|---|---|---|---|---|
| CB | Type | A | A | A | A |
| | Specific surface area (m²/g) | 240 | 240 | 240 | 240 |
| | Primary particle size (nm) | 20 | 20 | 20 | 20 |
| | Crystallite size (Å) | 16 | 16 | 16 | 16 |
| CNT | Average diameter (nm) | 6 | 6 | 6 | 6 |
| Positive electrode composition | Dispersing agent for CB | polyvinyl alcohol | polyvinyl alcohol | carboxyme thylcellulo se sodium salt | polyvinylp yrrolidone |
| | SP value (J/cm³) | 35 | 35 | 29 | 25 |
| | Dispersing agent for CNT | polyvinylp yrrolidone | polyvinyl butyral | polyvinylp yrrolidone | polyvinyl butyral |
| | SP value (J/cm³) | 25 | 24 | 25 | 24 |
| | Ratio (C₂/(C₁+C₂)) | 0.3 | 0.3 | 0.3 | 0.3 |
| Battery evaluation | Internal resistance (Ω) | 1.48 | 1.49 | 1.52 | 1.56 |
| | Rate capacity retention rate (%) | 96.4 | 95.9 | 92.1 | 90.1 |
| | Cycle capacity retention rate (%) | 93.2 | 92.8 | 91.1 | 90.3 |

**[Table 2]**

| | | Example 5 | Example 6 | Example 7 | Example 8 |
|---|---|---|---|---|---|
| CB | Type | A | A | B | C |
| | Specific surface area (m²/g) | 240 | 240 | 178 | 370 |
| | Primary particle size (nm) | 20 | 20 | 22 | 18 |
| | Crystallite size (Å) | 16 | 16 | 17 | 20 |
| CNT | Average diameter (nm) | 6 | 6 | 6 | 6 |
| Positive electrode composition | Dispersing agent for CB | polyvinyl alcohol | polyvinyl alcohol | polyvinyl alcohol | polyvinyl alcohol |
| | SP value (J/cm³) | 35 | 35 | 35 | 35 |
| | Dispersing agent for CNT | carboxyme thylcellulo se sodium salt | polyvinylp yrrolidone | polyvinylp yrrolidone | polyvinylp yrrolidone |
| | SP value (J/cm³) | 29 | 25 | 25 | 25 |
| | Ratio (C₂/(C₁+C₂)) | 0.3 | 0.6 | 0.3 | 0.3 |
| Battery evaluation | Internal resistance ( Ω) | 1.54 | 1.50 | 1.53 | 1.46 |
| | Rate capacity retention rate (%) | 91.7 | 94.7 | 91.3 | 96.5 |
| | Cycle capacity retention rate (%) | 90.9 | 92.1 | 90.1 | 92.3 |

**[Table 3]**

| | | Example 9 | Example 10 |
|---|---|---|---|
| CB | Type | A | A |
| | Specific surface area (m²/g) | 240 | 240 |
| | Primary particle size (nm) | 20 | 20 |
| | Crystallite size (Å) | 16 | 16 |
| CNT | Average diameter (nm) | 6 | 6 |
| Positive electrode composition | Dispersing agent for CB | polyvinyl alcohol | polyvinyl alcohol |
| | SP value (J/cm³) | 35 | 35 |
| | Dispersing agent for CNT | polyvinylpyrrolidone | polyvinylpyrrolidone |
| | SP value (J/cm³) | 25 | 25 |
| | Ratio (C₂/(C₁+C₂)) | 0.8 | 0.05 |
| Battery evaluation | Internal resistance ( Ω) | 1.59 | 1.64 |
| | Rate capacity retention rate (%) | 88.9 | 89.1 |
| | Cycle capacity retention rate (%) | 89.4 | 82.4 |

**[Table 4]**

| | | Comparati ve Example 1 | Comparati ve Example 2 | Comparati ve Example 3 | Comparati ve Example 4 |
|---|---|---|---|---|---|
| CB | Type | A | A | A | A |
| | Specific surface area (m²/g) | 240 | 240 | 240 | 240 |
| | Primary particle size (nm) | 20 | 20 | 20 | 20 |
| | Crystallite size (Å) | 16 | 16 | 16 | 16 |
| CNT | Average diameter (nm) | 6 | 6 | 6 | 6 |
| Positive electrode composition | Dispersing agent for CB | polyvinyl alcohol | polyvinylp yrrolidone | polyvinyl butyral | carboxyme thylcellulo se sodium salt |
| | SP value (J/cm³) | 35 | 25 | 24 | 29 |
| | Dispersing agent for CNT | polyvinyl alcohol | polyvinylp yrrolidone | polyvinyl butyral | carboxyme thylcellulo se sodium salt |
| | SP value (J/cm³) | 35 | 25 | 24 | 29 |
| | Ratio (C₂/(C₁+C₂)) | 0.3 | 0.3 | 0.3 | 0.3 |
| Battery evaluation | Internal resistance ( Ω) | 1.63 | 1.72 | 1.65 | 1.69 |
| | Rate capacity retention rate (%) | 86.1 | 84.7 | 85.5 | 85.1 |
| | Cycle capacity retention rate (%) | 85.8 | 83.4 | 84.9 | 83.4 |

**[Table 5]**

| | | Comparative Example 5 | Comparative Example 6 |
|---|---|---|---|
| CB | Type | LiTX-HP | ECP |
| | Specific surface area (m²/g) | 87 | 820 |
| | Primary particle size (nm) | 25 | 40 |
| | Crystallite size (Å) | 23 | 16 |
| CNT | Average diameter (nm) | 6 | 6 |
| Positive electrode composition | Dispersing agent for CB | polyvinyl alcohol | polyvinyl alcohol |
| | SP value (J/cm³) | 35 | 35 |
| | Dispersing agent for CNT | polyvinylpyrrolidone | polyvinylpyrrolidone |
| | SP value (J/cm³) | 25 | 25 |
| | Ratio (C₂/(C₁+C₂)) | 0.3 | 0.3 |
| Battery evaluation | Internal resistance ( Ω) | 2.39 | 1.72 |
| | Rate capacity retention rate (%) | 68.7 | 84.2 |
| | Cycle capacity retention rate (%) | 70.2 | 83.8 |

## Claims

1. A positive electrode composition containing a conductive material, an active material, a binding material, a dispersing agent for a conductive material, and a liquid medium,
wherein the conductive material includes carbon black and carbon nanotubes,
wherein the dispersing agent for a conductive material includes two or more dispersing agents having different SP values, and
wherein the carbon black has a BET specific surface area of 100 to 500 m²/g.

2. The positive electrode composition according to claim 1,
wherein a ratio (mass ratio) of the content of the carbon nanotubes to a total content of the carbon black and the carbon nanotubes is 0.1 to 0.7.

3. The positive electrode composition according to claim 1,
wherein the dispersing agent for a conductive material is selected from the group consisting of polyvinyl alcohol, polyvinylpyrrolidone, polyvinyl butyral, carboxymethyl cellulose and salts thereof, polyvinyl acetal, polyvinyl acetate, polyvinylamine and polyvinyl formal.

4. The positive electrode composition according to claim 1,
wherein the carbon black has a BET specific surface area of 100 to 400 m²/g and a crystallite size (Lc) of 15 to 26 Å.

5. The positive electrode composition according to claim 1,
wherein the carbon nanotubes have an average diameter of 5 to 15 nm.

6. A method of producing a positive electrode composition, comprising:
a first process in which a first agent containing a binding material and a first liquid medium, a second agent containing carbon black, a first dispersing agent for a conductive material and a second liquid medium, and a third agent containing carbon nanotubes, a second dispersing agent for a conductive material and a third liquid medium are mixed to obtain a mixed solution; and
a second process in which the mixed solution and an active material are mixed to obtain a positive electrode composition,
wherein the first dispersing agent for a conductive material has a different SP value from the second dispersing agent for a conductive material.

7. A method of producing a positive electrode composition, comprising:
a first process in which a first agent containing a binding material and a first liquid medium and a second agent containing carbon black, a first dispersing agent for a conductive material and a second liquid medium are mixed to obtain a first mixed solution;
a second process in which the first mixed solution and a third agent containing carbon nanotubes, a second dispersing agent for a conductive material and a third liquid medium are mixed to obtain a second mixed solution; and
a third process in which the second mixed solution and an active material are mixed to obtain a positive electrode composition,
wherein the first dispersing agent for a conductive material has a different SP value from the second dispersing agent for a conductive material.

8. The production method according to claim 6 or 7,
wherein the SP value of the first dispersing agent for a conductive material is higher than the SP value of the second dispersing agent for a conductive material.

9. The production method according to claim 6 or 7,
wherein a ratio (mass ratio) of the content of the carbon nanotubes to a total content of the carbon black and the carbon nanotubes is 0.1 to 0.7.

10. The production method according to claim 6 or 7,
wherein the first dispersing agent for a conductive material and the second dispersing agent for a conductive material each are selected from the group consisting of polyvinyl alcohol, polyvinylpyrrolidone, polyvinyl butyral, carboxymethyl cellulose and salts thereof, polyvinyl acetal, polyvinyl acetate, polyvinylamine and polyvinyl formal.

11. A method of producing a positive electrode, comprising
a process of applying the positive electrode composition according to any one of claims 1 to 5 onto a current collector to form a mixture layer containing the conductive material, the active material, the binding material and the dispersing agent for a conductive material on the current collector.

12. A positive electrode having a mixture layer containing a conductive material, an active material, a binding material and a dispersing agent for a conductive material,
wherein the conductive material includes carbon black and carbon nanotubes,
wherein the dispersing agent for a conductive material includes two or more dispersing agents having different SP values, and
wherein the carbon black has a BET specific surface area of 100 to 500 m²/g.

13. The positive electrode according to claim 12,
wherein a ratio (mass ratio) of the content of the carbon nanotubes to a total content of the carbon black and the carbon nanotubes is 0.1 to 0.7.

14. The positive electrode according to claim 12,
wherein the dispersing agent for a conductive material is selected from the group consisting of polyvinyl alcohol, polyvinylpyrrolidone, polyvinyl butyral, carboxymethyl cellulose and salts thereof, polyvinyl acetal, polyvinyl acetate, polyvinylamine and polyvinyl formal.

15. A battery comprising the positive electrode according to any one of claims 12 to 14.
